(19) Europäisches Patentamt / European Patent Office / Office européen des brevets

(11) **EP 4 383 895 A1**

(12) **EUROPEAN PATENT APPLICATION**
published in accordance with Art. 153(4) EPC

(43) Date of publication:
**12.06.2024 Bulletin 2024/24**

(21) Application number: **22853506.8**

(22) Date of filing: **05.08.2022**

(51) International Patent Classification (IPC):
**H04W 72/04** (2023.01)     **H04L 5/00** (2006.01)
**H04W 84/04** (2009.01)     **H04W 92/20** (2009.01)

(52) Cooperative Patent Classification (CPC):
**H04L 5/00; H04W 72/04; H04W 84/04; H04W 92/20**

(86) International application number:
**PCT/KR2022/011600**

(87) International publication number:
**WO 2023/014131 (09.02.2023 Gazette 2023/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  06.08.2021  KR 20210104117
                01.10.2021  KR 20210131147

(71) Applicant: **LG Electronics Inc.**
**Yeongdeungpo-gu**
**Seoul 07336 (KR)**

(72) Inventors:
• **YOU, Hyangsun**
  **Seoul 06772 (KR)**
• **KO, Hyunsoo**
  **Seoul 06772 (KR)**
• **SHIM, Jaenam**
  **Seoul 06772 (KR)**

(74) Representative: **Plasseraud IP**
**66, rue de la Chaussée d'Antin**
**75440 Paris Cedex 09 (FR)**

(54) **METHOD FOR OPERATING IAB NODE IN WIRELESS COMMUNICATION SYSTEM, AND DEVICE USING METHOD**

(57)     Provided are a method and a device for operating an IAB node including a DU and an MT in a wireless communication system. In order to match an RBG resource grid of an MT with a grid of a resource block set for frequency domain attribute (H/S/NA) setting of a DU, the grid of the resource block set for frequency domain attribute (H/S/NA) setting of the DU is based on a reference point of the RBG resource grid of the MT.

FIG. 25

**Description**

**TECHNICAL FIELD**

The present disclosure relates to a method of operating an integrated access and backhaul (IAB) node including a distributed unit (DU) and a mobile terminal (MT) in a wireless communication system, and an apparatus using the method.

**BACKGROUND ART**

As more and more communication devices require more communication capacity, there is a need for improved mobile broadband communication over existing radio access technology. Also, massive machine type communications (MTC), which provides various services by connecting many devices and objects, is one of the major issues to be considered in the next generation communication. In addition, communication system design considering reliability/latency sensitive service/user equipment (UE) is being discussed. The introduction of next generation radio access technology considering enhanced mobile broadband communication (eMBB), massive MTC (mMTC), ultra-reliable and low latency communication (URLLC) is discussed. This new technology may be called new radio access technology (new RAT or NR) in the present disclosure for convenience.

In NR, massive MIMO or multi-beam may be used, and a very large bandwidth is expected to be available compared to LTE, and the development and deployment of integrated access and backhaul (IAB) nodes is also expected.

An IAB node may be a node that supports a wireless connection with a UE/orther node like a repeater based on a wireless backhaul (connection with a parent node or a donor node) supporting multi-hop. The IAB node may include a distributed unit (DU) and a mobile terminal (MT). Here, the DU may be a part that provides a connection to a UE or other node, and the MT may be a part that provides a connection to a parent node or a donor node.

Conventionally, the MT and DU of the IAB node supported only non-simultaneous operations. In other words, the MT and DU of the IAB node operated in the TDM (time division multiplexing) method. However, as standardization progressed and simultaneous operation between the MT and DU of the IAB node was supported, for example, frequency division multiplexing (FDM) operation, setting of the frequency domain attributes of the DU was introduced. Here, the attribute means whether the radio resource is hard (H), soft (S), or not-available (NA). In this sense, frequency domain attribute configurations may also be referred to as frequency domain H/S/NA configurations.

Setting frequency domain attributes is to determine FDM operation resources between MT and DU. When the frequency domain granularity/unit for setting the frequency domain attributes of a DU is called a resource block set, the problem is how the resource block set should be related to the resource block group (RBG) of the MT. It is also a problem of how the reference points for the construction of the resource block set for the frequency domain H/S/NA setup of the DU should be related to the reference points for the grid of RBGs in the MT.

**DISCLOSURE**

**TECHNICAL PROBLEM**

An object of the present disclosure is to provide a method of operating an IAB node including a DU and an MT, and an apparatus using the method.

**TECHNICAL SOLUTION**

In one aspect, provided is a method of operating an IAB node including a distributed unit (DU) and a mobile terminal (MT) in a wireless communication system. The method includes determining resource block groups (RBGs) for a first bandwidth part (BWP) of the MT, determining a resource block set which is a granularity for setting frequency domain attributes for a second BWP of the DU. The total number of RBGs of the first BWP is determined based on the size of the first BWP, the starting PRB of the first BWP, and the RBG size P determined for the first BWP. Of the total number of RBGs, the size of the first RBG and the last RBG may be P or less depending on the relationship of P to the at least one of the size of the first BWP and the starting PRBs of the first BWP, and the size of the remaining RBGs is P. The size of the first BWP and the starting PRB of the first BWP are based on the common resource block (CRB) #0 of the MT. The resource block set for the DU is determined based on CRB#0 of the MT.

In another aspect, provided is an integrated access and backhaul (IAB) node including a distributed unit (DU) and a mobile terminal (MT). The IAB node includes a transceiver, at least one memory and at least one processor operatively coupled with the at least one memory and the transceiver. The processor performs the method of operating the IAB node described above.

In still another aspect, provided is an apparatus of an integrated access and backhaul (IAB) node including a distributed unit (DU) and a mobile terminal (MT). The apparatus includes at least one memory and at least one processor operatively coupled with the at least one memory. The processor performs the method of operating the IAB node described above.

In still another aspect, provided is at least one computer readable medium (CRM) having instructions to be executed by at least one processor to perform operations. The CRM performs each of the steps of the method of operation of the IAB node described above.

## ADVANTAGEOUS EFFECTS

In an IAB node comprising an MT and a DU, the RB set for the frequency domain H/S/NA configurations of the DU and the RBGs of the MT are aligned to prevent unnecessary interference from occurring.

Furthermore, in an IAB node comprising an MT and a DU, when the MT and the DU perform simultaneous operations such as FDM, the efficiency of the FDM operation is increased.

## BRIEF DESCRIPTION OF THE DRAWINGS

FIG. 1 shows a wireless communication system to which the present disclosure can be applied.
FIG. 2 is a diagram showing a wireless protocol architecture for a user plane.
FIG. 3 is a diagram showing a wireless protocol architecture for a control plane.
FIG. 4 illustrates a system structure of a next generation radio access network (NG-RAN) to which NR is applied.
FIG. 5 illustrates a functional division between an NG-RAN and a 5GC.
FIG. 6 illustrates an example of a frame structure that may be applied in NR.
FIG. 7 illustrates a slot structure of an NR frame.
FIG. 8 illustrates CORESET.
FIG. 9 is a diagram illustrating a difference between a related art control region and the CORESET in NR.
FIG. 10 illustrates an example of a frame structure for new radio access technology.
FIG. 11 illustrates a structure of a self-contained slot.
FIG. 12 illustrates physical channels and typical signal transmission.
FIG. 13 schematically illustrates an example for a network with integrated access and backhaul links (IAB).
FIG. 14 schematically illustrates an example of the configuration of access and backhaul links.
FIG. 15 illustrates the IAB node operating in stand alone (SA) mode or non-stand alone (NSA).
FIG. 16 illustrates a backhaul link and an access link.
FIG. 17 illustrates a parent link and a child link.
FIG. 18 illustrates timing alignment case 1.
FIG. 19 illustrates timing alignment case 6.
FIG. 20 illustrates timing alignment case 7.
FIG. 21 illustrates non-simultaneous or simultaneous operation between MT and DU of an IAB node.
FIG. 22 illustrates a bandwidth part (BWP).
FIG. 23 illustrates an example of configuring the RBG of an MT.
FIG. 24 illustrates that the RBG grid of the MT and the RB set grid of the DU are configured to match or mismatch depending on the location of CRB#0 of the DU and CRB#0 of the MT.
FIG. 25 illustrates a method of operation of an IAB node including a distributed unit (DU) and a mobile terminal (MT) in a wireless communication system.
FIG. 26 illustrates a wireless device that may be applicable to the present disclosure.
FIG. 27 illustrates another example of a wireless device.
FIG. 28 illustrates one example of a signal processing module structure.
FIG. 29 shows another example of the structure of a signal processing module in a transmission device.
FIG. 30 illustrates one example of a wireless communication device, according to an implementation example of the present disclosure.
FIG. 31 illustrates a communication system 1 applied to the present specification.

## MODE FOR INVENTION

In the present specification, "A or B" may mean "only A", "only B" or "both A and B". In other words, in the present specification, "A or B" may be interpreted as "A and/or B". For example, in the present specification, "A, B, or C" may mean "only A", "only B", "only C", or "any combination of A, B, C".

A slash (/) or comma used in the present specification may mean "and/or". For example, "A/B" may mean "A and/or B". Accordingly, "A/B" may mean "only A", "only B", or "both A and B". For example, "A, B, C" may mean "A, B, or C".

In the present specification, "at least one of A and B" may mean "only A", "only B", or "both A and B". In addition, in the present specification, the expression "at least one of A or B" or "at least one of A and/or B" may be interpreted as "at least one of A and B".

In addition, in the present specification, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present specification may mean "for example". Specifically, when indicated as "control information (PDCCH)", it may mean that "PDCCH" is proposed as an example of the "control information". In other words, the "control information" of the present specification is not limited to "PDCCH", and "PDCCH" may be proposed as an example of the "control information". In addition, when indicated as "control information (i.e., PDCCH)", it may also mean that "PDCCH" is proposed as an example of the "control information".

Technical features described individually in one figure in the present specification may be individually implemented, or may be simultaneously implemented.

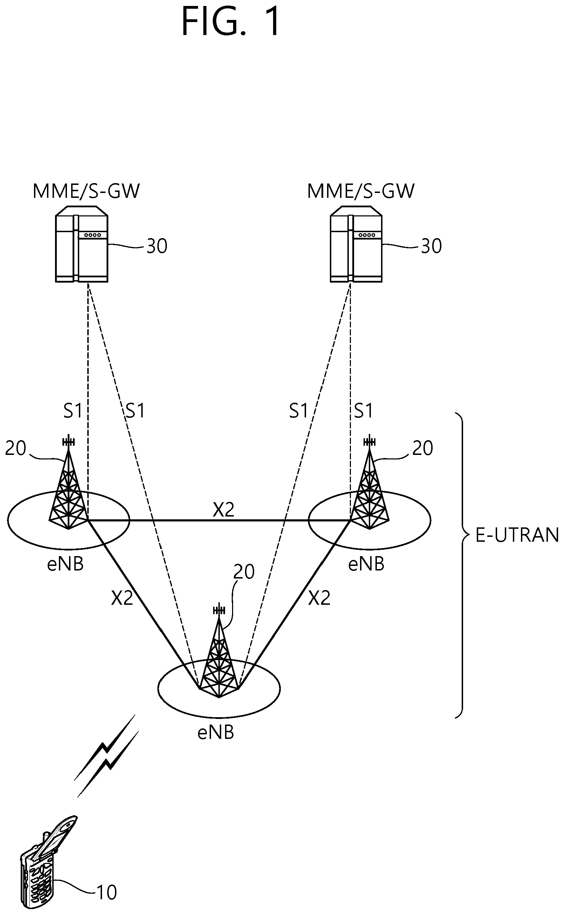

FIG. 1 shows a wireless communication system to which the present disclosure may be applied. The wireless communication system may be referred to as an Evolved-UMTS Terrestrial Radio Access Network (E-UTRAN) or a Long Term Evolution (LTE)/LTE-A system.

The E-UTRAN includes at least one base station (BS) 20 which provides a control plane and a user plane to a user equipment (UE) 10. The UE 10 may be fixed or mobile, and may be referred to as another terminology, such as a mobile station (MS), a user terminal (UT), a subscriber station (SS), a mobile terminal (MT), a wireless device, etc. The BS 20 is generally a fixed station that communicates with the UE 10 and may be referred to as another terminology, such as an evolved node-B (eNB), a base transceiver system (BTS), an access point, etc.

The BSs 20 are interconnected by means of an X2 interface. The BSs 20 are also connected by means of an S1 interface to an evolved packet core (EPC) 30, more specifically, to a mobility management entity (MME) through S1-MME and to a serving gateway (S-GW) through S1-U.

The EPC 30 includes an MME, an S-GW, and a packet data network-gateway (P-GW). The MME has access information of the UE or capability information of the UE, and such information is generally used for mobility management of the UE. The S-GW is a gateway having an E-UTRAN as an end point. The P-GW is a gateway having a PDN as an end point.

Layers of a radio interface protocol between the UE and the network can be classified into a first layer (L1), a second layer (L2), and a third layer (L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

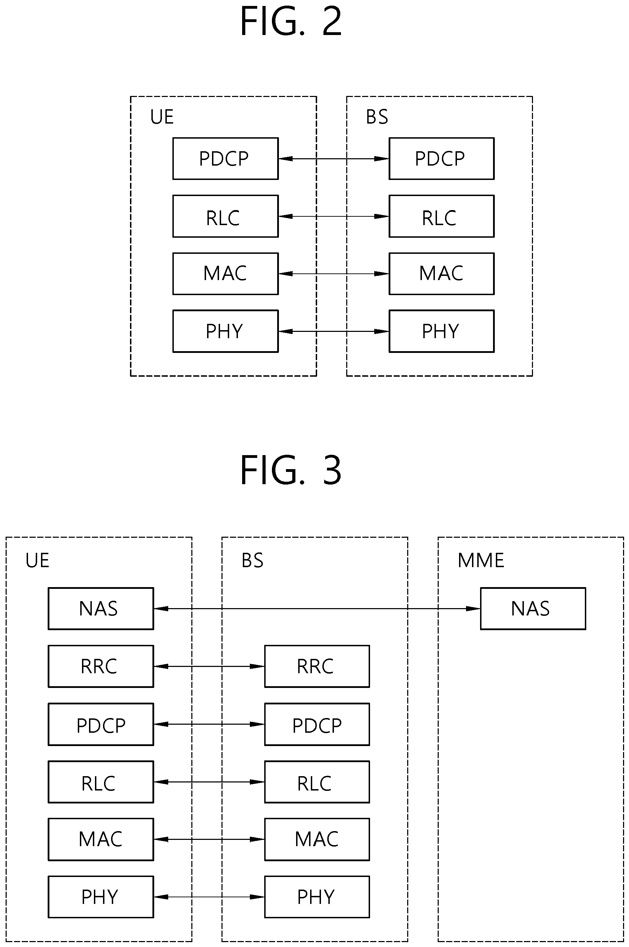

FIG. 2 is a diagram showing a wireless protocol architecture for a user plane. FIG. 3 is a diagram showing a wireless protocol architecture for a control plane. The user plane is a protocol stack for user data transmission. The control plane is a protocol stack for control signal transmission.

Referring to FIGs. 2 and 3, a PHY layer provides an upper layer(=higher layer) with an information transfer service through a physical channel. The PHY layer is connected to a medium access control (MAC) layer which is an upper layer of the PHY layer through a transport channel. Data is transferred between the MAC layer and the PHY layer through the transport channel. The transport channel is classified according to how and with what characteristics data is transferred through a radio interface.

Data is moved between different PHY layers, that is, the PHY layers of a transmitter and a receiver, through a physical channel. The physical channel may be modulated according to an Orthogonal Frequency Division Multiplexing (OFDM) scheme, and use the time and frequency as radio resources.

The functions of the MAC layer include mapping between a logical channel and a transport channel and multiplexing and demultiplexing to a transport block that is provided through a physical channel on the transport channel of a MAC Service Data Unit (SDU) that belongs to a logical channel. The MAC layer provides service to a Radio Link Control (RLC) layer through the logical channel.

The functions of the RLC layer include the concatenation, segmentation, and reassembly of an RLC SDU. In order to guarantee various types of Quality of Service (QoS) required by a Radio Bearer (RB), the RLC layer provides three types of operation mode: Transparent Mode (TM), Unacknowledged Mode (UM), and Acknowledged Mode (AM). AM RLC provides error correction through an Automatic Repeat Request (ARQ).

The RRC layer is defined only on the control plane. The RRC layer is related to the configuration, reconfiguration, and release of radio bearers, and is responsible for control of logical channels, transport channels, and PHY channels.

An RB means a logical route that is provided by the first layer (PHY layer) and the second layers (MAC layer, the RLC layer, and the PDCP layer) in order to transfer data between UE and a network.

The function of a Packet Data Convergence Protocol (PDCP) layer on the user plane includes the transfer of user data and header compression and ciphering. The function of the PDCP layer on the user plane further includes the transfer and encryption/integrity guard of control plane data.

What an RB is configured means a process of defining the characteristics of a wireless protocol layer and channels in order to provide specific service and configuring each detailed parameter and operating method. An RB can be divided into two types of a Signaling RB (SRB) and a Data RB (DRB). The SRB is used as a passage through which an RRC message is transmitted on the control plane, and the DRB is used as a passage through which user data is transmitted on the user plane.

If RRC connection is established between the RRC layer of UE and the RRC layer of an E-UTRAN, the UE is in the RRC connected state. If not, the UE is in the RRC idle state.

A downlink transport channel through which data is transmitted from a network to UE includes a broadcast channel (BCH) through which system information is transmitted and a downlink shared channel (SCH) through which user traffic or control messages are transmitted. Traffic or a control message for downlink multicast or broadcast service may be transmitted through the downlink SCH, or may be transmitted through an additional downlink multicast channel (MCH). Meanwhile, an uplink transport channel through which data is transmitted from UE to a network includes a random access channel (RACH) through which an initial control message is transmitted and an uplink shared channel (SCH) through which user traffic or control messages are transmitted.

Logical channels that are placed over the transport channel and that are mapped to the transport channel include a broadcast control channel (BCCH), a paging control channel (PCCH), a common control channel (CCCH), a multicast control channel (MCCH), and a multicast traffic channel (MTCH).

The physical channel includes several OFDM symbols in the time domain and several subcarriers in the frequency domain. One subframe includes a plurality of OFDM symbols in the time domain. An RB is a resources allocation unit, and includes a plurality of OFDM symbols and a plurality of subcarriers. Furthermore, each subframe may use specific subcarriers of specific OFDM symbols (e.g., the first OFDM symbol) of the corresponding subframe for a physical downlink control channel (PDCCH), that is, an L1/L2 control channel. A Transmission Time Interval (TTI) is a unit time for subframe transmission.

Hereinafter, a new radio access technology (new RAT, NR) will be described.

As more and more communication devices require more communication capacity, there is a need for improved mobile broadband communication over existing radio access technology. Also, massive machine type communications (MTC), which provides various services by connecting many devices and objects, is one of the major issues to be considered in the next generation communication. In addition, communication system design considering reliability/latency sensitive service/UE is being discussed. The introduction of next generation radio access technology considering enhanced mobile broadband communication (eMBB), massive MTC (mMTC), ultrareliable and low latency communication (URLLC) is discussed. This new technology may be called new radio access technology (new RAT or NR) in the present disclosure for convenience.

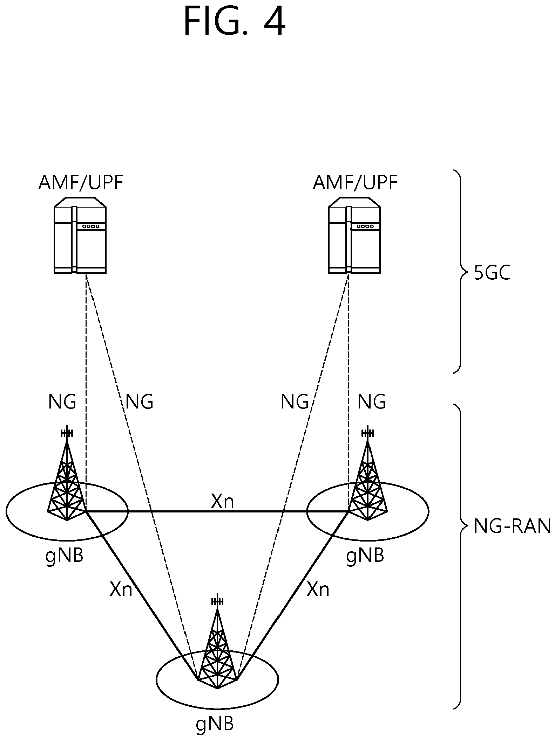

FIG. 4 illustrates a system structure of a next generation radio access network (NG-RAN) to which NR is applied.

Referring to FIG. 4, the NG-RAN may include a gNB and/or an eNB that provides user plane and control plane protocol termination to a UE. FIG. 4 illustrates the case of including only gNBs. The gNB and the eNB are connected by an Xn interface. The gNB and the eNB are connected to a 5G core network (5GC) via an NG interface. More specifically, the gNB and the eNB are connected to an access and mobility management function (AMF) via an NG-C interface and connected to a user plane function (UPF) via an NG-U interface.

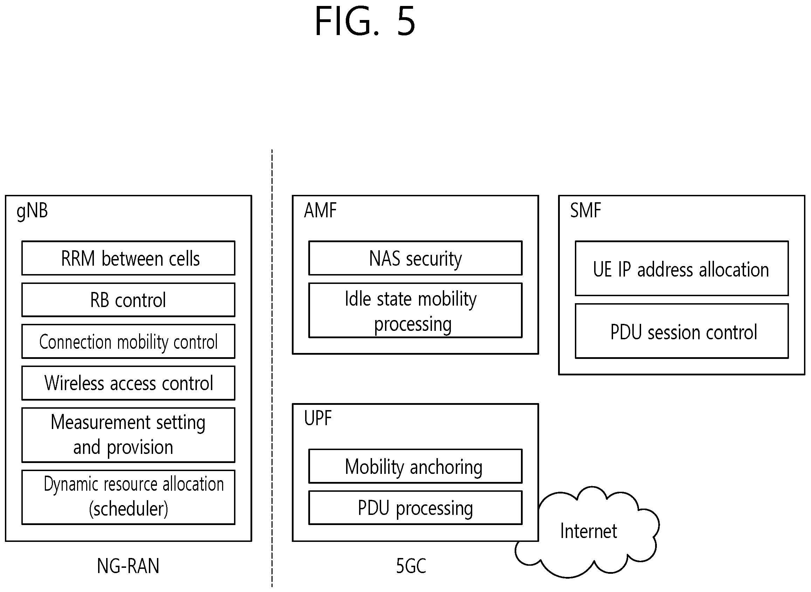

FIG. 5 illustrates a functional division between an NG-RAN and a 5GC.

Referring to FIG. 5, the gNB may provide functions such as an inter-cell radio resource management (Inter Cell RRM), radio bearer management (RB control), connection mobility control, radio admission control, measurement configuration & provision, dynamic resource allocation, and the like. The AMF may provide functions such as NAS security, idle state mobility handling, and so on. The UPF may provide functions such as mobility anchoring, PDU processing, and the like. The SMF may provide functions such as UE IP address assignment, PDU session control, and so on.

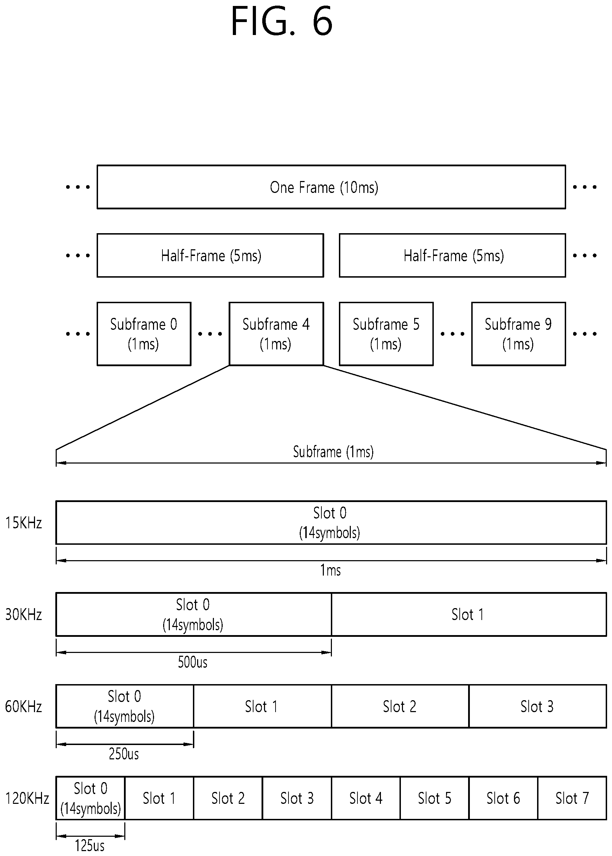

FIG. 6 illustrates an example of a frame structure that may be applied in NR.

Referring to FIG. 6, in the NR, a radio frame (hereinafter, also referred to as a frame) may be used in uplink and downlink transmissions. The frame has a length of 10ms, and may be defined as two 5ms half-frames (HFs). The HF may be defined as five 1ms subframes (SFs). The SF may be divided into one or more slots, and the number of slots within the SF depends on a subcarrier spacing (SCS). Each slot includes 12 or 14 OFDM(A) symbols according to a cyclic prefix (CP). In case of using a normal CP, each slot includes 14 symbols. In case of using an extended CP, each slot includes 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following table 1 illustrates a subcarrier spacing configuration $\mu$.

[Table 1]

| $\mu$ | $\Delta f = 2^{\mu} \cdot 15$[kHz] | Cyclic prefix |
|---|---|---|
| 0 | 15 | Normal |
| 1 | 30 | Normal |
| 2 | 60 | Normal Extended |
| 3 | 120 | Normal |
| 4 | 240 | Normal |

The following table 2 illustrates the number of slots in a frame ($N^{frame,\mu}_{slot}$), the number of slots in a subframe ($N^{subframe,\mu}_{slot}$), the number of symbols in a slot ($N^{slot}_{symb}$), and the like, according to subcarrier spacing configurations $\mu$.

[Table 2]

| $\mu$ | $N^{slot}_{symb}$ | $N^{frame\mu}_{slot}$ | $N^{subframe\mu}_{slot}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

FIG. 6 illustrates a case of $\mu$=0, 1, 2, 3.

Table 2-1 below illustrates that the number of symbols per slot, the number of slots per frame, and the number of slots per subframe vary depending on the SCS, in case of using an extended CP.

[Table 2-1]

| SCS ($15 \cdot 2^{\mu}$) | $N^{slot}_{symb}$ | $N^{frame,u}_{slot}$ | $N^{subframe,u}_{slot}$ |
|---|---|---|---|
| 60kHz ($\mu$ =2) | 12 | 40 | 4 |

In an NR system, OFDM(A) numerologies (e.g., SCS, CP length, and so on) may be differently configured between a plurality of cells integrated to one UE. Accordingly, an (absolute time) duration of a time resource (e.g., SF, slot or TTI) (for convenience, collectively referred to as a time unit (TU)) configured of the same number of symbols may be differently configured between the integrated cells.

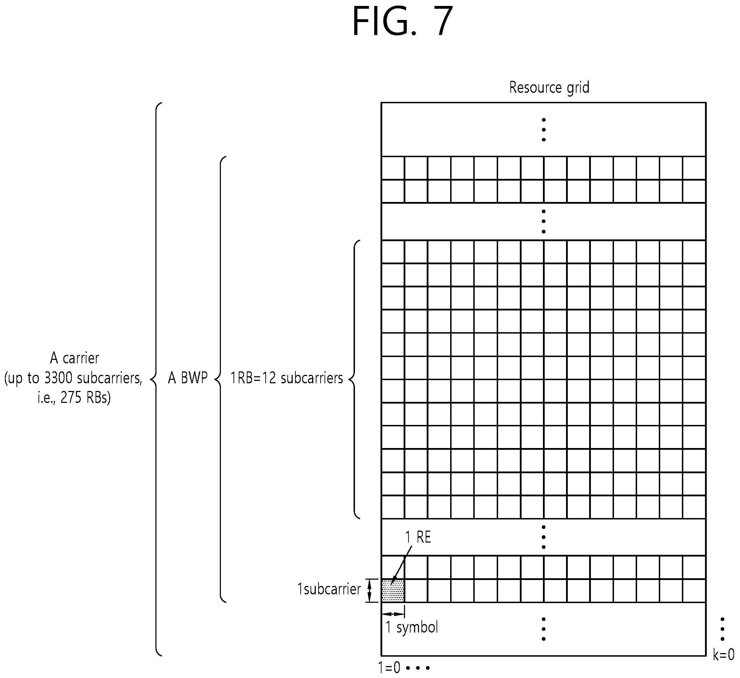

FIG. 7 illustrates a slot structure of an NR frame.

A slot may include a plurality of symbols in a time domain. For example, in case of a normal CP, one slot may include 7 symbols. However, in case of an extended CP, one slot may include 6 symbols. A carrier may include a plurality of subcarriers in a frequency domain. A resource block (RB) may be defined as a plurality of consecutive subcarriers (e.g., 12 subcarriers) in the frequency domain. A bandwidth part (BWP) may be defined as a plurality of consecutive (physical) resource blocks ((P)RBs) in the frequency domain, and the BWP may correspond to one numerology (e.g., SCS, CP length, and so on). The carrier may include up to N (e.g., 5) BWPs. Data communication may be performed via an active BWP, and only one BWP may be activated for one UE. In a resource grid, each element may be referred to as a resource element (RE), and one complex symbol may be mapped thereto.

A physical downlink control channel (PDCCH) may include one or more control channel elements (CCEs) as illustrated in the following table 3.

[Table 3]

| Aggregation level | Number of CCEs |
|---|---|
| 1 | 1 |
| 2 | 2 |
| 4 | 4 |
| 8 | 8 |
| 16 | 16 |

That is, the PDCCH may be transmitted through a resource including 1, 2, 4, 8, or 16 CCEs. Here, the CCE includes six resource element groups (REGs), and one REG includes one resource block in a frequency domain and one orthogonal frequency division multiplexing (OFDM) symbol in a time domain.

Monitoring implies decoding of each PDCCH candidate according to a downlink control information (DCI) format. The UE monitors a set of PDCCH candidates in one or more CORESETs (to be described below) on an active DL BWP of each activated serving cell in which PDCCH monitoring is configured, according to a corresponding search space set.

A new unit called a control resource set (CORESET) may be introduced in the NR. The UE may receive a PDCCH in the CORESET.

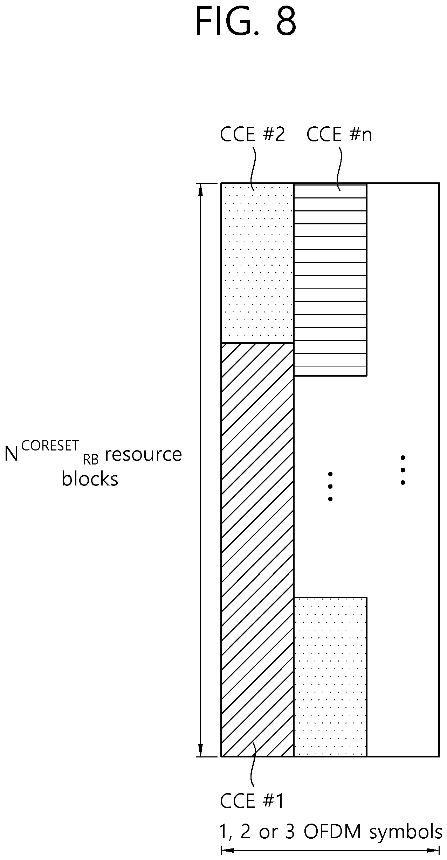

FIG. 8 illustrates CORESET.

Referring to FIG. 8, the CORESET includes $N^{CORESET}_{RB}$ number of resource blocks in the frequency domain, and $N^{CORESET}_{symb} \in \{1, 2, 3\}$ number of symbols in the time domain. $N^{CORESET}_{RB}$ and $N^{CORESET}_{symb}$ may be provided by a base station via higher layer signaling. As illustrated in FIG. 8, a plurality of CCEs (or REGs) may be included in the CORESET.

The UE may attempt to detect a PDCCH in units of 1, 2, 4, 8, or 16 CCEs in the CORESET. One or a plurality of CCEs in which PDCCH detection may be attempted may be referred to as PDCCH candidates.

A plurality of CORESETs may be configured for the UE.

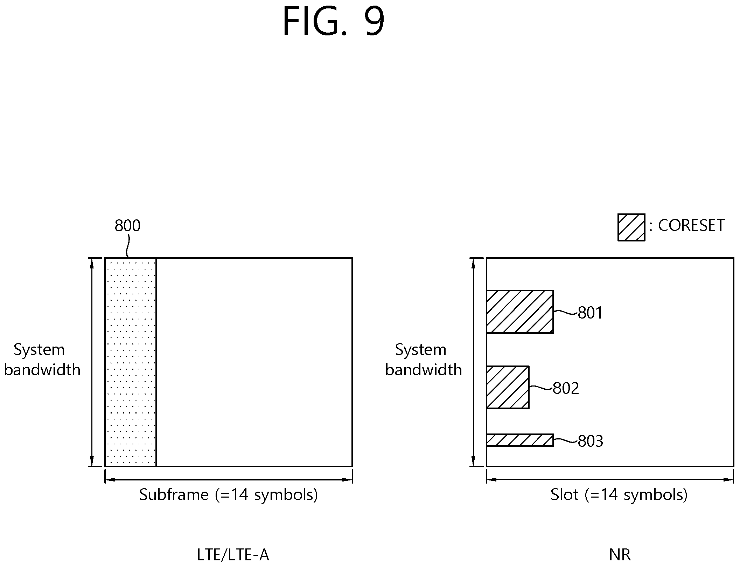

FIG. 9 is a diagram illustrating a difference between a related art control region and the CORESET in NR.

Referring to FIG. 9, a control region 800 in the related art wireless communication system (e.g., LTE/LTE-A) is configured over the entire system band used by a base station (BS). All the UEs, excluding some (e.g., eMTC/NB-IoT UE) supporting only a narrow band, should be able to receive wireless signals of the entire system band of the BS in order to properly receive/decode control information transmitted by the BS.

On the other hand, in NR, CORESET described above was introduced. CORESETs 801, 802, and 803 are radio resources for control information to be received by the UE and may use only a portion, rather than the entirety of the system bandwidth. The BS may allocate the CORESET to each UE and may transmit control information through the allocated CORESET. For example, in FIG. 9, a first CORESET 801 may be allocated to UE 1, a second CORESET 802 may be allocated to UE 2, and a third CORESET 803 may be allocated to UE 3. In the NR, the UE may receive control information from the BS, without necessarily receiving the entire system band.

The CORESET may include a UE-specific CORESET for transmitting UE-specific control information and a common CORESET for transmitting control information common to all UEs.

Meanwhile, NR may require high reliability according to applications. In such a situation, a target block error rate (BLER) for downlink control information (DCI) transmitted through a downlink control channel (e.g., physical downlink control channel (PDCCH)) may remarkably decrease compared to those of conventional technologies. As an example of a method for satisfying requirement that requires high reliability, content included in DCI can be reduced and/or the amount of resources used for DCI transmission can be increased. Here, resources can include at least one of resources in the time domain, resources in the frequency domain, resources in the code domain and resources in the spatial domain.

In NR, the following technologies/features can be applied.

<Self-contained subframe structure>

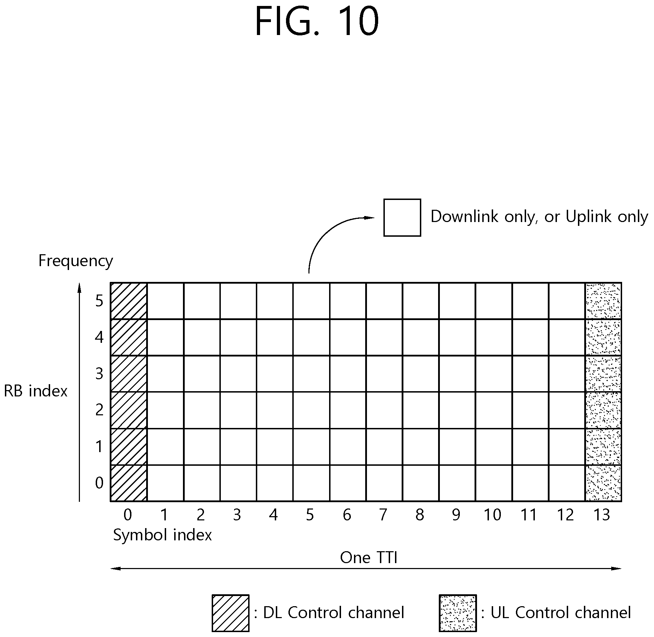

FIG. 10 illustrates an example of a frame structure for new radio access technology.

In NR, a structure in which a control channel and a data channel are time-division-multiplexed within one TTI, as shown in FIG. 10, can be considered as a frame structure in order to minimize latency.

In FIG. 10, a shaded region represents a downlink control region and a black region represents an uplink control region. The remaining region may be used for downlink (DL) data transmission or uplink (UL) data transmission. This structure is characterized in that DL transmission and UL transmission are sequentially performed within one subframe and thus DL data can be transmitted and UL ACK/NACK can be received within the subframe. Consequently, a time required from occurrence of a data transmission error to data retransmission is reduced, thereby minimizing latency in final data transmission.

In this data and control TDMed subframe structure, a time gap for a base station and a UE to switch from a transmission mode to a reception mode or from the reception mode to the transmission mode may be required. To this end, some OFDM symbols at a time when DL switches to UL may be set to a guard period (GP) in the self-contained subframe structure.

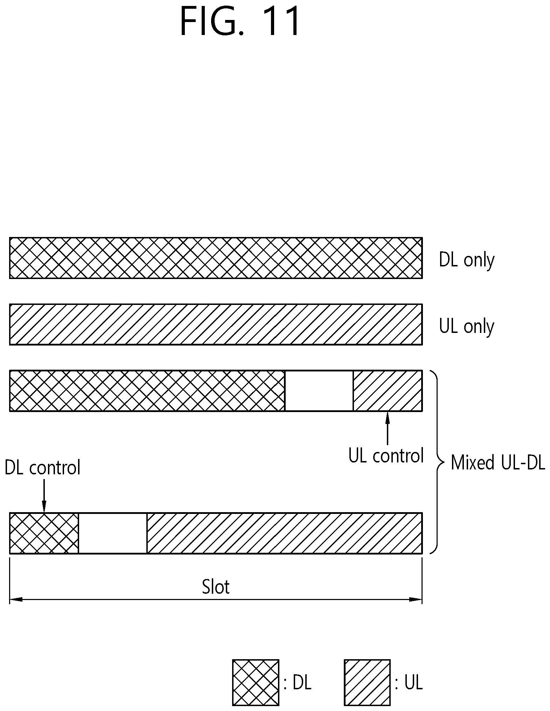

FIG. 11 illustrates a structure of a self-contained slot.

In an NR system, a DL control channel, DL or UL data, a UL control channel, and the like may be contained in one slot. For example, first N symbols (hereinafter, DL control region) in the slot may be used to transmit a DL control channel, and last M symbols (hereinafter, UL control region) in the slot may be used to transmit a UL control channel. N and M are integers greater than or equal to 0. A resource region (hereinafter, a data region) which exists between the DL control region and the UL control region may be used for DL data transmission or UL data transmission. For example, the following configuration may be considered. Respective durations are listed in a temporal order.

    1. DL only configuration
    2. UL only configuration
    3. Mixed UL-DL configuration

- DL region + Guard period (GP) + UL control region
- DL control region + GP + UL region

    DL region: (i) DL data region, (ii) DL control region + DL data region
    UL region: (i) UL data region, (ii) UL data region + UL control region

A PDCCH may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region. Downlink control information (DCI), for example, DL data scheduling information, UL data scheduling information, and the like, may be transmitted on the PDCCH. Uplink control information (UCI), for example, ACK/NACK information about DL data, channel state information (CSI), and a scheduling request (SR), may be transmitted on the PUCCH. A GP provides a time gap in a process in which a BS and a UE switch from a TX mode to an RX mode or a process in which the BS and the UE switch from the RX mode to the TX mode. Some symbols at the time of switching from DL to UL within a subframe may be configured as the GP.

<Analog beamforming #1>

Wavelengths are shortened in millimeter wave (mmW) and thus a large number of antenna elements can be installed in the same area. That is, the wavelength is 1 cm at 30 GHz and thus a total of 100 antenna elements can be installed in the form of a 2-dimensional array at an interval of 0.5 lambda (wavelength) in a panel of $5 \times 5$ cm. Accordingly, it is possible to increase a beamforming (BF) gain using a large number of antenna elements to increase coverage or improve throughput in mmW.

In this case, if a transceiver unit (TXRU) is provided to adjust transmission power and phase per antenna element, independent beamforming per frequency resource can be performed. However, installation of TXRUs for all of about 100 antenna elements decreases effectiveness in terms of cost. Accordingly, a method of mapping a large number of antenna elements to one TXRU and controlling a beam direction using an analog phase shifter is considered. Such analog beamforming can form only one beam direction in all bands and thus cannot provide frequency selective beamforming.

Hybrid beamforming (BF) having a number B of TXRUs which is smaller than Q antenna elements can be considered as an intermediate form of digital BF and analog BF. In this case, the number of directions of beams which can be simultaneously transmitted are limited to B although it depends on a method of connecting the B TXRUs and the Q antenna elements.

<Analog beamforming #2>

When a plurality of antennas is used in NR, hybrid beamforming which is a combination of digital beamforming and analog beamforming is emerging. Here, in analog beamforming (or RF beamforming) an RF end performs precoding (or combining) and thus it is possible to achieve the performance similar to digital beamforming while reducing the number of RF chains and the number of D/A (or A/D) converters. For convenience, the hybrid beamforming structure may be represented by N TXRUs and M physical antennas. Then, the digital beamforming for the L data layers to be transmitted at the transmitting end may be represented by an N by L matrix, and the converted N digital signals are converted into analog signals via TXRUs, and analog beamforming represented by an M by N matrix is applied.

System information of the NR system may be transmitted in a broadcasting manner. In this case, in one symbol, analog beams belonging to different antenna panels may be simultaneously transmitted. A scheme of introducing a beam RS (BRS) which is a reference signal (RS) transmitted by applying a single analog beam (corresponding to a specific antenna panel) is under discussion to measure a channel per analog beam. The BRS may be defined for a plurality of antenna ports, and each antenna port of the BRS may correspond to a single analog beam. In this case, unlike the BRS, a synchronization signal or an xPBCH may be transmitted by applying all analog beams within an analog beam group so as to be correctly received by any UE.

In the NR, in a time domain, a synchronization signal block (SSB, or also referred to as a synchronization signal and physical broadcast channel (SS/PBCH)) may consist of 4 OFDM symbols indexed from 0 to 3 in an ascending order within a synchronization signal block, and a PBCH associated with a primary synchronization signal (PSS), secondary synchronization signal (SSS), and demodulation reference signal (DMRS) may be mapped to the symbols. As described above, the synchronization signal block may also be represented by an SS/PBCH block.

In NR, since a plurality of synchronization signal blocks(SSBs) may be transmitted at different times, respectively, and the SSB may be used for performing initial access (IA), serving cell measurement, and the like, it is preferable to transmit the SSB first when transmission time and resources of the SSB overlap with those of other signals. To this purpose, the network may broadcast the transmission time and resource information of the SSB or indicate them through UE-specific RRC signaling.

In NR, beams may be used for transmission and reception. If reception performance of a current serving beam is degraded, a process of searching for a new beam through the so-called Beam Failure Recovery (BFR) may be performed.

Since the BFR process is not intended for declaring an error or failure of a link between the network and a UE, it may be assumed that a connection to the current serving cell is retained even if the BFR process is performed. During the BFR process, measurement of different beams (which may be expressed in terms of CSI-RS port or Synchronization Signal Block (SSB) index) configured by the network may be performed, and the best beam for the corresponding UE may be selected. The UE may perform the BFR process in a way that it performs an RACH process associated with a beam yielding a good measurement result.

Now, a transmission configuration indicator (hereinafter, TCI) state will be described. The TCI state may be configured for each CORESET of a control channel, and may determine a parameter for determining an RX beam of the UE, based on the TCI state.

For each DL BWP of a serving cell, a UE may be configured for three or fewer CORESETs. Also, a UE may receive the following information for each CORESET.

1) CORESET index p (one of 0 to 11, where index of each CORESET may be determined uniquely among BWPs of one serving cell),
2) PDCCH DM-RS scrambling sequence initialization value,
3) Duration of a CORESET in the time domain (which may be given in symbol units),
4) Resource block set,
5) CCE-to-REG mapping parameter,
6) Antenna port quasi co-location indicating quasi co-location (QCL) information of a DM-RS antenna port for receiving a PDCCH in each CORESET (from a set of antenna port quasi co-locations provided by a higher layer parameter called 'TCI-State'),
7) Indication of presence of Transmission Configuration Indication (TCI) field for a specific DCI format transmitted by the PDCCH in the CORESET, and so on.

QCL will be described. If a characteristic of a channel through which a symbol on one antenna port is conveyed can be inferred from a characteristic of a channel through which a symbol on the other antenna port is conveyed, the two antenna ports are said to be quasi co-located (QCLed). For example, when two signals A and B are transmitted from the same transmission antenna array to which the same/similar spatial filter is applied, the two signals may go through the same/similar channel state. From a perspective of a receiver, upon receiving one of the two signals, another signal may be detected by using a channel characteristic of the received signal.

In this sense, when it is said that the signals A and B are quasi co-located (QCLed), it may mean that the signals A and B have went through a similar channel condition, and thus channel information estimated to detect the signal A is also useful to detect the signal B. Herein, the channel condition may be defined according to, for example, a Doppler shift, a Doppler spread, an average delay, a delay spread, a spatial reception parameter, or the like.

A 'TCI-State' parameter associates one or two downlink reference signals to corresponding QCL types (QCL types A, B, C, and D, see Table 4).

[Table 4]

| QCL Type | Description |
|----------|-------------|
| QCL-TypeA | Doppler shift, Doppler spread, Average delay, Delay spread |
| QCL-TypeB | Doppler shift, Doppler spread' |
| QCL-TypeC | Doppler shift, Average delay |
| QCL-TypeD | Spatial Rx parameter |

Each 'TCI-State' may include a parameter for configuring a QCL relation between one or two downlink reference signals and a DM-RS port of a PDSCH (or PDCCH) or a CSI-RS port of a CSI-RS resource.

Meanwhile, for each DL BWP configured to a UE in one serving cell, the UE may be provided with 10 (or less) search space sets. For each search space set, the UE may be provided with at least one of the following information.

1) search space set index s ($0 \leq s < 40$), 2) an association between a CORESET p and the search space set s, 3) a PDCCH monitoring periodicity and a PDCCH monitoring offset (slot unit), 4) a PDCCH monitoring pattern within a slot (e.g., indicating a first symbol of a CORSET in a slot for PDCCH monitoring), 5) the number of slots in which the search space set s exists, 6) the number of PDCCH candidates per CCE aggregation level, 7) information indicating whether the search space set s is CSS or USS.

In the NR, a CORESET#0 may be configured by a PBCH (or a UE-dedicated signaling for handover or a PSCell configuration or a BWP configuration). A search space (SS) set#0 configured by the PBCH may have monitoring offsets (e.g., a slot offset, a symbol offset) different for each associated SSB. This may be required to minimize a search space occasion to be monitored by the UE. Alternatively, this may be required to provide a beam sweeping control/data region capable of performing control/data transmission based on each beam so that communication with the UE is persistently performed in a situation where a best beam of the UE changes dynamically.

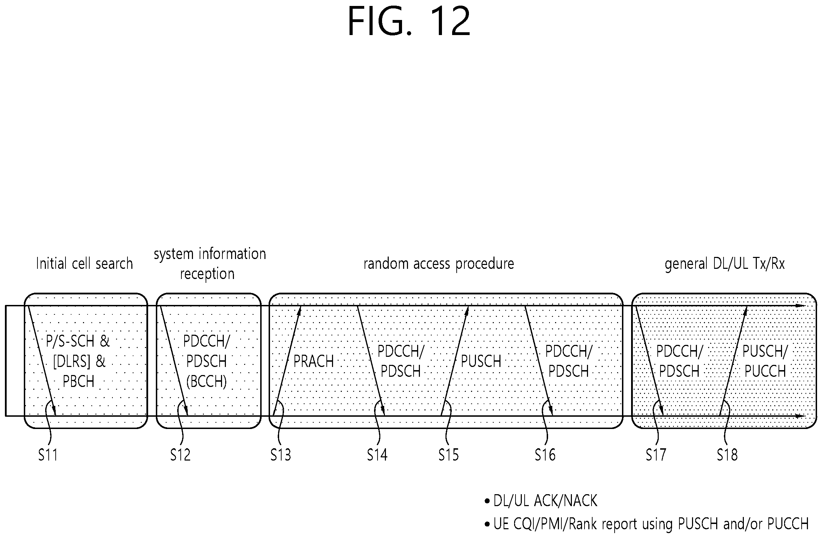

FIG. 12 illustrates physical channels and typical signal transmission.

Referring to FIG. 12, in a wireless communication system, a UE receives information from a BS through a downlink (DL), and the UE transmits information to the BS through an uplink (UL). The information transmitted/received by the BS and the UE includes data and a variety of control information, and there are various physical channels according to a type/purpose of the information transmitted/received by the BS and the UE.

The UE which is powered on again in a power-off state or which newly enters a cell performs an initial cell search operation such as adjusting synchronization with the BS or the like (S11). To this end, the UE receives a primary synchronization channel (PSCH) and a secondary synchronization channel (SSCH) from the BS to adjust synchronization with the BS, and acquire information such as a cell identity (ID) or the like. In addition, the UE may receive a physical broadcast channel (PBCH) from the BS to acquire broadcasting information in the cell. In addition, the UE may receive a downlink reference signal (DL RS) in an initial cell search step to identify a downlink channel state.

Upon completing the initial cell search, the UE may receive a physical downlink control channel (PDCCH) and a physical downlink control channel (PDSCH) corresponding thereto to acquire more specific system information (S12).

Thereafter, the UE may perform a random access procedure to complete an access to the BS (S 13 ~ S16). Specifically, the UE may transmit a preamble through a physical random access channel (PRACH) (S13), and may receive a random access response (RAR) for the preamble through a PDCCH and a PDSCH corresponding thereto (S14). Thereafter, the UE may transmit a physical uplink shared channel (PUSCH) by using scheduling information in the RAR (S15), and may perform a contention resolution procedure similarly to the PDCCH and the PDSCH corresponding thereto (S16).

After performing the aforementioned procedure, the UE may perform PDCCH/PDSCH reception (S17) and PUSCH/physical uplink control channel (PUCCH) transmission (S18) as a typical uplink/downlink signal transmission procedure. Control information transmitted by the UE to the BS is referred to as uplink control information (UCI). The UCI includes hybrid automatic repeat and request (HARQ) acknowledgement (ACK)/negative-ACK (NACK), scheduling request (SR), channel state information (CSI), or the like. The CSI includes a channel quality indicator (CQI), a precoding matrix indicator (PMI), a rank indication (RI), or the like. In general, the UCI is transmitted through the PUCCH. However, when control information and data are to be transmitted simultaneously, the UCI may be transmitted through the PUSCH. In addition, the UE may aperiodically transmit the UCI through the PUSCH according to a request/instruction of a network.

In order to enable reasonable battery consumption when bandwidth adaptation (BA) is configured, only one uplink BWP and one downlink BWP or only one downlink/uplink BWP pair for each uplink carrier may be activated at once in an active serving cell, and all other BWPs configured in the UE are deactivated. In the deactivated BWPs, the UE does not monitor the PDCCH, and does not perform transmission on the PUCCH, PRACH, and UL-SCH.

EP 4 383 895 A1

For the BA, RX and TX bandwidths of the UE are not necessarily as wide as a bandwidth of a cell, and may be adjusted. That is, it may be commanded such that a width is changed (e.g., reduced for a period of low activity for power saving), a position in a frequency domain is moved (e.g., to increase scheduling flexibility), and a subcarrier spacing is changed (e.g., to allow different services). A subset of the entire cell bandwidth of a cell is referred to as a bandwidth part (BWP), and the BA is acquired by configuring BWP(s) to the UE and by notifying the UE about a currently active BWP among configured BWPs. When the BA is configured, the UE only needs to monitor the PDCCH on one active BWP. That is, there is no need to monitor the PDCCH on the entire downlink frequency of the cell. A BWP inactive timer (independent of the aforementioned DRX inactive timer) is used to switch an active BWP to a default BWP. That is, the timer restarts when PDCCH decoding is successful, and switching to the default BWP occurs when the timer expires.

Hereinafter, an integrated access and backhaul link (IAB) will be described. Meanwhile, hereinafter, for convenience of description, a proposed method will be described based on a new RAT (NR) system. However, the range of the system to which the proposed method is applied is expandable to other systems such as 3GPP LTE/LTE-A systems in addition to the NR system.

One of the potential technologies aimed at enabling future cellular network deployment scenarios and applications is support for wireless backhaul and relay links, and it enables flexible and highly dense deployment of NR cells without the need to proportionally densify the transport network.

It is expected that greater bandwidth in NR compared to LTE will be available (e.g., mmWave spectrum) with the native deployment of massive MIMO or multi-beam systems, thus, occasions are created for the development and deployment of integrated access and backhaul links. This makes it easier of a dense network of self-backhauled NR cells in a more integrated manner by establishing multiple control and data channels/procedures defined to provide access or access to the UEs. Such systems are referred to as integrated access and backhaul links (IAB).

The following terms may be used in the present disclosure.

- AC (x): an access link between the node (x) and the UE(s).
- BH (xy): a backhaul link between the node (x) and the node (y).

In this case, the node may mean a donor gNB (DgNB) or a relay node (RN). Here, the DgNB or the donor node may be a gNB that provides a function to support backhaul to IAB nodes.

In addition, in the present disclosure, for convenience of explanation, when relay node 1 and relay node 2 exist, relay node 1 which is connected to relay node 2 by a backhaul link and relaying data transmitted and received to relay node 2 is called a parent node of relay node 2, and relay node 2 is called a child node of relay node 1.

Technical features that are individually described in one drawing in this specification may be implemented individually or simultaneously.

The following drawings were created to explain a specific example of the present specification. Since the names of specific devices described in the drawings or the names of specific signals/messages/fields are presented by way of example, the technical features of the present specification are not limited to the specific names used in the following drawings.

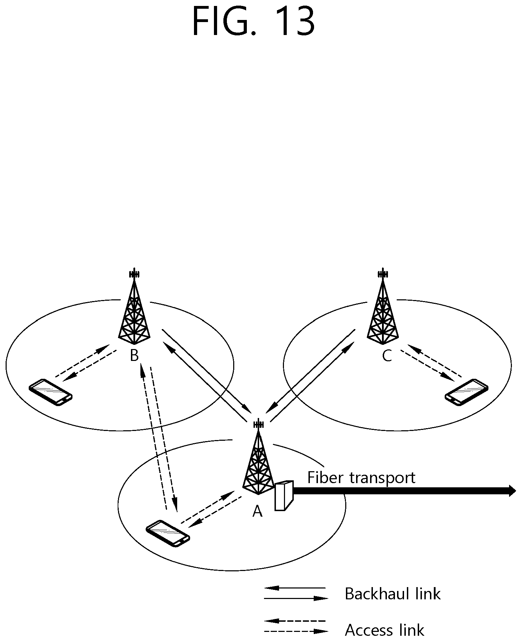

FIG. 13 schematically illustrates an example for a network with integrated access and backhaul links (IAB).

According to FIG. 13, relay nodes (rTRPs) may multiplex access and backhaul links in the time, frequency, or space domain (i.e., beam-based operation).

The operation of different links may operate on the same frequency or on different frequencies (which may also be referred to as 'in-band' or 'out-band' relays, respectively). Efficient support of out-of-band relays may be important for some NR deployment scenarios. Close interworking with access links operating on the same frequency to accommodate duplex restrictions and avoid/mitigate interference is also very important.

Furthermore, operating the NR system in the millimeter wave spectrum may have problems such as severe short-term blocking that cannot be easily mitigated by the current RRC-based handover mechanism. Overcoming the short-term blocking in mmWave systems may require a fast RAN-based mechanism for switching between rTRPs that does not necessarily require the inclusion of a core network. It may also be necessary to develop an integrated framework that allows for fast switching of over-access and backhaul links. Over-the-air (OTA) coordination between rTRPs may also be considered to mitigate interference and support end-to-end path selection and optimization.

Addressing the following requirements in relation to IAB in NR may be necessary.

- Efficient and flexible operation for in-band and out-of-band relaying in indoor and outdoor scenarios
- Multi-hop and redundant connections
- End-to-end path selection and optimization
- Support of backhaul links with high spectral efficiency
- Support of legacy NR UEs

11

Legacy NR is designed to support half-duplex devices. Thus, half-duplex is supported and deserves to be targeted in the IAB scenario. Furthermore, IAB devices having a full duplex may also be considered.

In the IAB scenario, if each relay node (RN) does not have the scheduling capability, the donor gNB (DgNB) should schedule the entire links between the DgNB, related relay nodes and UEs. In other words, the DgNB should make a scheduling decision for all links by collecting traffic information from all related relay nodes, and then inform each relay node of the scheduling information.

On the other hand, distributed scheduling can be performed when each relay node has a scheduling capability. Then, immediate scheduling of the uplink scheduling request of the UE is possible, and the backhaul/access link can be used more flexibly by reflecting the surrounding traffic conditions.

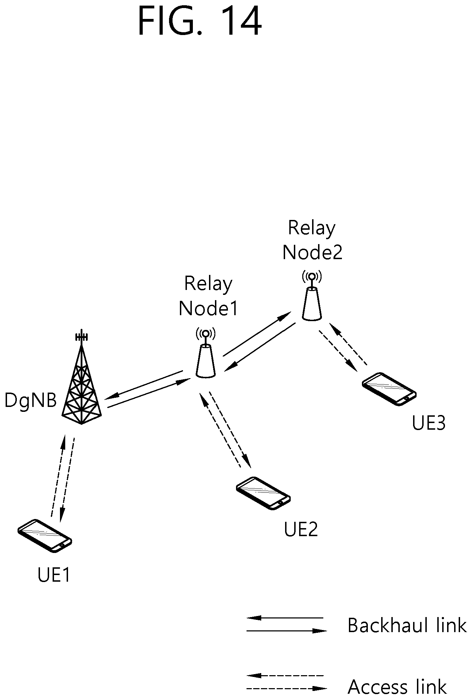

FIG. 14 schematically illustrates an example of the configuration of access and backhaul links.

FIG. 14 illustrates an example in which a backhaul link and an access link are configured when DgNB and IAB relay nodes (RNs) exist. The DgNB, relay node 1, and relay node 2 are connected to a backhaul link, and UEs 1, 2, and 3 are sequentially connected to the DgNB, relay node 1, and relay node 2 through the access link.

The DgNB may make a scheduling decision of two backhaul links and three access links, and inform the scheduling results. Such centralized scheduling may include scheduling delays and cause latency issues.

If each relay node has a scheduling capability, distributed scheduling may be performed. Then, immediate scheduling of the uplink scheduling request of the UE can be performed, and the backhaul/access links can be used more flexibly by reflecting the surrounding traffic conditions.

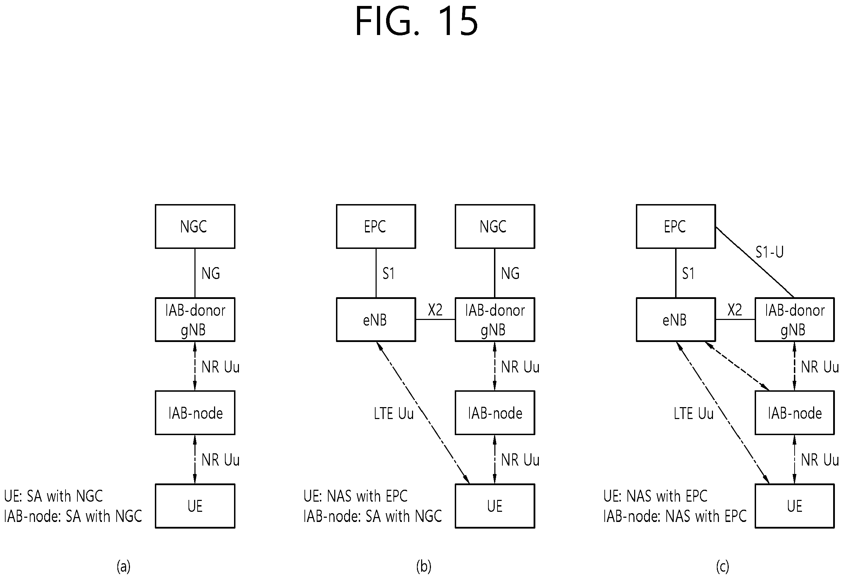

FIG. 15 illustrates that the IAB node operates in stand alone (SA) mode or non-stand alone (NSA).

(a) of FIG.15 illustrates that both the UE and the IAB node operate in SA mode in relation to the NGC, (b) of FIG.15 illustrates that the UE operates in the NSA mode in relation to the EPC while the IAB node operates in the SA mode in the relation with the NGC, and (c) of FIG.15 illustrates that both the UE and the IAB node operate in the NSA mode in relation to the EPC.

That is, the IAB node may operate in SA mode or NSA mode. When operating in NSA mode, the IAB node uses only the NR link for backhauling. A UE connecting to the IAB node may select an operation mode different from that of the IAB node. The UE may additionally connect to a different type of core network than the connected IAB node. IAB nodes operating in NSA mode may be connected to the same or different eNBs. A UE operating in the NSA node may connect to the same or different eNB as the connected IAB node.

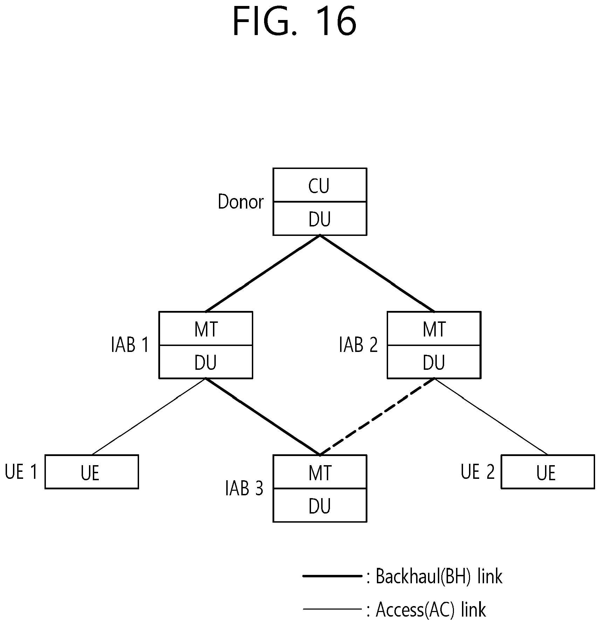

FIG. 16 illustrates a backhaul link and an access link.

Referring to FIG. 16, a link between a donor node (which may be referred to as a parent node) and an IAB node or a link between IAB nodes is called a backhaul link. On the other hand, the link between the donor node and the UE or the link between the IAB node and the UE is called an access link. Specifically, the link between the MT of the IAB node and the DU of the parent node or the link between the DU of the IAB node and the MT of the child node of the IAB node is called a backhaul link, and the link between the DU of the IAB node and the UE may be referred to as an access link.

For communication with the parent node, the IAB node may be provided with an MT configuration indicating link direction information on a backhaul link between the parent node and itself. In addition, for communication with the child node, the IAB node may be provided with a DU configuration that informs the link direction for an access link between the child node/access UE and itself and link availability information.

In the existing IAB node, the DU and the MT performed TDM operation which is to operate through different time resources. On the other hand, in a future communication system, it may be required to perform resource multiplexing such as SDM/FDM and full duplexing (FD) between DU and MT for efficient resource management.

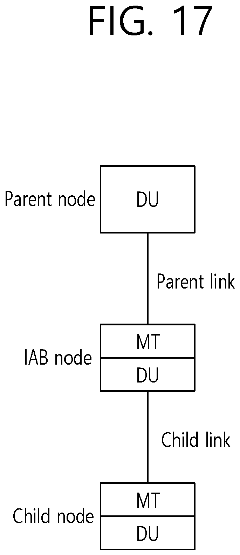

FIG. 17 illustrates a parent link and a child link.

Referring to FIG. 17, a link between an IAB node (specifically, IAB MT) and a parent node (specifically, parent DU) is referred to as a parent link, and a link between an IAB node (specifically, IAB DU) and a child node (specifically, child MT) is called a child link. The parent link may be the above-mentioned backhaul link, and the child link may be a backhaul link or an access link depending on what the child node is. That is, if the child node is an IAB node, it may be a backhaul link, and if the child node is a UE, it may be an access link. TDM operation between parent link and child link has been previously discussed, and SDM/FDM and FD operation are currently being discussed.

From the DU perspective of the IAB node, there are multiple types of time resources for a child link: downlink (DL), uplink (UL), and flexible (=F)) in terms of resource direction.

Each downlink, uplink, and flexible time resource on a child link of a DU can be a hard (H), soft (S), or not-available (NA) resource in terms of attributes. Here, an unavailable resource means that the resource is not used for communication on the DU child link. Hard resources mean that they are always available for communication on the DU child link. Soft resources may be explicitly and/or implicitly controlled by the parent node as to whether they can be used for communication on the DU child link (availability). This will be discussed in more detail later.

In this disclosure, a configuration for the link (resource) direction (DL/UL/F, which may also be denoted as D/U/F) and link (resource) attribute (Hard/Soft/NA) of a time resource for a DU child link may be referred to as a "DU configuration". This configuration can be used for effective multiplexing and interference handling between IAB nodes. For example, this configuration can be used to indicate whether time resources are valid for a parent link or a child link. It can also be used to coordinate interference between child nodes. Considering these aspects, DU configurations may be more effective when configured semi-statically and IAB node-specifically.

The availability of soft resources can be dynamically configured through physical layer (L1)-based implicit/explicit signaling. Hereinafter, "IA" means that a DU resource is expressly or impliedly indicated to be available, and "INA" may mean that a DU resource is expressly or impliedly indicated to be unavailable. Dynamic L1-based signaling may indicate whether the DU soft resource is "IA" or "INA".

From a DU perspective, soft resources may be IA (indicated as available) or not IA. At this time, a non-IA state may be interpreted as an INA (indicated as not available) state. Whether a soft resource is IA or not can be indicated through availability indicator (AI) information, and the AI information can be indicated from the parent node to the IAB node via AI-DCI. The following DCI format 2_5 is an example of an AI-DCI.

<DCI format 2_5>

DCI Format 2_5 is a DCI format used to notify the availability of soft resources. The following information may be transmitted via DCI format 2_5 with a CRC scrambled by the AI-RNTI.

Availability indicator 1, availability indicator 2, ... , availability indicator N.

The size of DCI format 2_5 with CRC scrambled by AI-RNTI can be configured by a higher layer up to 128 bits.

Similar to the SFI configurations for access links, an IAB node MT can have three types of time resources for its parent link: downlink (DL), uplink (UL), and flexible (F).

DU and MT that reside (or are co-located) within the same IAB node may not operate simultaneously and may operate in TDM due to intra-node interference, slot/symbol boundary misalignment, power sharing, etc.

On the other hand, multiplexing of SDM/FDM between DU and MT can also be used. This is applicable, for example, when the DU and MT use different panels and there is little interference impact between the panels. In this case, DU and MT that exist (or are co-located) within the same IAB node can transmit (DU transmission, MT transmission) or reception (DU reception, MT reception) at the same time(It may be difficult to implement for DU and MT to transmit and receive (DU transmitting, MT receiving) or receive and transmit (DU receiving, MT transmitting) simultaneously).

Alternatively, full duplexing (FD) may be used between the DU and MT. This is applicable when there is little interference impact between the DU and MT, for example, when the frequency domains in which the DU operates and the frequency domains in which the MT operates are far apart. In such cases, DU and MT that are co-located within the same IAB node are free to transmit and receive simultaneously. DU and MT may transmit or receive simultaneously, and each of DU and MT can transmit and receive, or receive and transmit, simultaneously.

The MT and DU of an IAB node can also be composed of multiple component carriers (CCs), meaning that they use multiple CCs. In this case, the different CCs can operate in the same or different frequency domains or use the same or different panels.

The MT and DU of an IAB node may use multiple component carriers (CCs) (or, alternatively, the MT and DU of an IAB node may be described as consisting of multiple CCs). Or it may be expressed that multiple serving cells are configured).

At this time, different CCs may operate in the same or different frequency regions or use the same or different panels.

One of the multiplexing methods among TDM, SDM/FDM, and FD can be applied between a specific CC of the MT and a specific CC of the DU. For example, if a specific MT-CC and DU-CC are located in different inter-band frequency regions, FD may be applied between the MT-CC and DU-CC.

On the other hand, the TDM method can be applied between MT-CC and DU-CC located in the same frequency region.

Even within the same CC, different multiplexing methods can be applied between MT and DU.

In this disclosure, DU-CC can be interpreted as being replaced with DU cell.

The Tx/Rx timing alignment method of the IAB node that can be considered in the IAB environment may be as follows.

Case 1: DL transmit timing alignment between IAB node and IAB donor.

Case 2: DL and UL transmit timings are aligned within an IAB node.

Case 3: DL and UL receive timings are aligned within the IAB node.

Case 4: Within the IAB node, using Case 2 for transmissions and Case 3 for receptions.

Case 5: In different time slots within the IAB node, use Case 1 for access link timing and Case 4 for backhaul link timing.

Case 6: Use the DL transmit timing of Case 1 and the UL transmit timing of Case 2.

Case 7: Use the DL transmit timing of Case 1 and the UL transmit timing of Case 3.

In the present disclosure, timing alignment may mean slot-level alignment or symbol-level alignment.

DAPS-HO (Dual active protocol stack based handover) is explained.

DAPS handover (hereinafter abbreviated as DAPS) can be defined as a handover procedure that maintains the connection to the source gNB until the source cell (source gNB) is released after receiving the RRC message (HO Command) for handover and after successful random access to the target cell (target gNB).

From a UE functional perspective, DAPS may generally have the following characteristics.

In terms of transmission operation, 1) common sequence number (SN), 2) separate header compression for source and target cells, 3) separate ciphering for source and target cells.

In terms of receive operation, 1) separate deciphering for source and target cells, 2) separate header decompression for source and target cells, 3) common PDCP reordering, 4) in-sequence delivery and duplication detection, and 5) Common buffer management.

In general, networks and UEs have the same processes and functions for both transmission and reception operations. The difference may be whether these functions are co-located. In the network, all functions except DL PDCP SN assignment and UL PDCP reordering are not separately deployed and performed by the source eNB or target eNB. Therefore, we assume two PDCP entities located at the source eNB and target eNB respectively.

On the UE side, all functions, including SN assignment and PDCP reordering, are placed together. Therefore, on the UE side, all functions for DAPS can be modeled as a single PDCP entity. For a single UL data transfer, only header compression and security processing for the source eNB or target eNB may be used.

RF/baseband requirements for the UE

To minimize interruptions, it may be necessary for the UE to continue sending and receiving data to and from the source cell when performing the random access procedure to the target cell, whether SAPS or DAPS. This is only possible if the UE supports simultaneous transmission and reception to and from two cells. In most cases, this works for UEs with Dual Rx/Dual Tx chains, and more restrictions may apply for UEs with Dual Rx/Single Tx RF chains or Single Rx/Single Tx RF chains. In addition, partitioning of the UE's capabilities may be required for effective use of baseband and RF resources. Tuning the baseband and RF resources of the device is not as straightforward for SAPS, which can cause additional disruption and device complexity.

For UEs with dual Rx/single Tx RF chains, to support simultaneous UL data transmission to the source eNB and UL RACH transmission to the target eNB, if some requirements can be met (e.g., the bandwidth of the source cell is greater than the bandwidth of the target cell, and the Tx power difference for the two cells is within certain limits), simultaneous transmission can be supported.

Otherwise, some sort of UL TDM pattern is required, which may add additional downtime and UL switching complexity. However, this UE option can provide flexibility for different UE implementations in terms of hardware and power efficiency (especially for lower layer devices, UEs that cannot use UL CA and/or UL MIMO).

For UEs with a single Rx/single Tx RF chain, if some requirements can be met (e.g., the bandwidth of the source cell is larger than the bandwidth of the target cell, and the Tx/Rx power difference of the two cells is within a certain limit), they can support simultaneous transmission/reception. Otherwise, a TDM design is required for both DL and UL, which can add complexity to both the UE and the network. In addition, RF chain switching is required for both DL and UL, which can increase HO downtime and switching complexity.

When the UE indicates its capability for DAPS handover, the UE may be provided with a source master cell group (MCG) and a target MCG. The UE may determine the transmit power of the MCG and the transmit power of the SCG by frequency range.

UE transmissions may overlap in the target and source cells. For example, if 1) the carrier frequencies for the target MCG and source MCG are intra-frequency and intra-band, with overlapping time resources, and 2) the carrier frequencies for the target MCG and source MCG are intra-frequency and not intra-band, the UE transmissions may overlap in overlapping time resources and overlapping frequency resources.

For intra-frequency DAPS HO operation, the UE may expect the target cell's active DL BWP and active UL BWP to be within the source cell's active DL BWP and active UL BWP respectively.

The UE may provide the ability to monitor the maximum number of PDCCH candidates per slot for the target MCG and the maximum number of PDCCH candidates per slot for the source MCG.

For PRACH transmissions, the MT of the IAB node determines the frames and subframes within the frames that contain PRACH occasions. The MT in the IAB node may determine the association period for mapping SS/PBCH blocks to PRACH occasions based on the PRACH configuration period as shown in the table below. The association pattern period includes one or more association periods and may be determined so that the pattern between the PRACH occasion and the SS/PBCH block repeats at a maximum of every 640 msec. PRACH occasions within a PRACH slot may be valid or invalid depending on conditions.

The following table illustrates the mapping between the PRACH configuration period for the MT of the IAB node and the SS/PBCH block.

[Table 5]

| PRACH configuration period (msec) | Association period, number of PRACH configuration periods |
|---|---|
| 10 | {1, 2, 4, 8, 16, 32, 64} |
| 20 | {1, 2, 4, 8, 16, 32} |
| 40 | {1, 2, 4, 8, 16} |
| 80 | {1, 2, 4, 8} |
| 160 | {1, 2, 4} |
| 320 | {1, 2} |
| 640 | {1} |

If an IAB-node is provided $T_{delta}$ from a serving cell, the IAB node may assume that $(N_{TA} + N_{TA,offset}) \cdot T_c/2 + T_{delta}$ is the time difference between DU transmission of the signal from the serving cell and signal reception by the MT of the IAB node (when $(N_{TA} + N_{TA,offset}) \cdot T_c/2 + T_{delta} > 0$). The IAB node may use the time difference to determine the DU transmission time.

The slot format for the DU of an IAB node or the MT of an IAB node may include downlink symbols, uplink symbols, and flexible symbols.

For each serving cell in the DU of an IAB node, the DU of the IAB node may be provided with an 'IAB-DU-Resource-Configuration'. The 'IAB-DU-Resource-Configuration' may provide indications for slot format across multiple slots.

For each serving cell, the MT of the IAB node may be provided with 'tdd-UL-DL-ConfigDedicated-IAB-MT', which may provide an indication of the slot format across multiple slots. If the MT of the IAB node is provided with 'tdd-UL-DL-ConfigDedicated-IAB-MT', 'tdd-UL-DL-ConfigDedicated-IAB-MT' can only override flexible symbols in the number of slots provided by 'TDD-UL-DL-ConfigurationCommon'.

'tdd-UL-DL-ConfigDedicated-IAB-MT' can provide the following information.

1) a set of slot configurations given by 'slotSpecificConfigurationsToAddModList-IAB-MT', 2) for each slot configuration in the set of slot configurations, the slot index for the slot given by 'slotIndex', and 3) a set of symbols for the slot given by 'symbols', where if 'symbol' is 'allDownlink', then all symbols in the slot are downlinks, If 'symbols' is 'allUplink', then all symbols in the slot are uplinks, and if 'symbol' is 'explicit', then 'nrofDownlinkSymbols' may provide the number of the first downlink symbol in the slot and 'nrofUplinkSymbols' may provide the number of the last uplink symbol in the slot. If 'nrofDownlinkSymbols' is not provided, it may mean that there is no downlink first symbol in the slot, and if 'nrofUplinkSymbols' is not provided, it may mean that there is no uplink last symbol in the slot. The remaining symbols in the slot are flexible.

If 'symbols' is 'explicit-IAB-MT', then 'nrofUplinkSymbols' may provide the number of the first uplink symbol in the slot and 'nrofDownlinkSymbols' may provide the number of the last downlink symbol in the slot. If 'nrofUplinkSymbols' is not provided, this may mean that there is no uplink first symbol in the slot, and if 'nrofDownlinkSymbols' is not provided, this may mean that there is no downlink last symbol in the slot. The remaining symbols in the slot are flexible symbols.

The slot format for the DU of the IAB node or the MT of the IAB node may include downlink symbols, uplink symbols, and flexible symbols. Slot format information may refer to information indicating whether each symbol is a downlink symbol, an uplink symbol, or a flexible symbol.

For each slot with the corresponding index provided by 'slotIndex', the MT of the IAB node may apply the format provided by the corresponding 'symbols'. The MT of the IAB node is provided with a list of slot format combinations applicable to one serving cell by 'SlotFormatCombinationsPerCell-IAB-MT', and configurations for monitoring DCI format 2_0, which indicates the slot format combination, by 'SlotFormatIndicator-IAB-MT'. The SFI field of DCI format 2_0 can indicate to the MT of the IAB node one slot format from the slot formats in the following table.

The following table illustrates the slot format in normal CP.

[Table 6]

| Slot Format | Symbol number in a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 56 | U | U | U | U | U | U | U | U | U | U | U | U | U | F |

(continued)

| Slot Format | Symbol number in a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 57 | U | U | U | U | U | U | U | U | U | U | U | U | F | F |
| 58 | U | U | U | U | U | U | U | U | U | U | U | F | F | F |
| 59 | U | U | U | U | U | U | U | U | U | U | F | F | F | F |
| 60 | U | U | U | U | U | U | U | U | U | F | F | F | F | F |
| 61 | U | U | U | U | U | U | U | U | F | F | F | F | F | F |
| 62 | U | U | U | U | U | U | U | F | F | F | F | F | F | F |
| 63 | U | U | U | U | U | U | F | F | F | F | F | F | F | F |
| 64 | U | U | U | U | U | F | F | F | F | F | F | F | F | F |
| 65 | U | U | U | U | F | F | F | F | F | F | F | F | F | F |
| 66 | U | U | U | F | F | F | F | F | F | F | F | F | F | F |
| 67 | U | U | F | F | F | F | F | F | F | F | F | F | F | F |
| 68 | U | F | F | F | F | F | F | F | F | F | F | F | F | F |
| 69 | U | F | F | F | F | F | F | F | F | F | F | F | F | D |
| 70 | U | U | F | F | F | F | F | F | F | F | F | F | F | D |
| 71 | U | U | U | F | F | F | F | F | F | F | F | F | F | D |
| 72 | U | F | F | F | F | F | F | F | F | F | F | F | D | D |
| 73 | U | U | F | F | F | F | F | F | F | F | F | F | D | D |
| 74 | U | U | U | F | F | F | F | F | F | F | F | F | D | D |
| 75 | U | F | F | F | F | F | F | F | F | F | F | D | D | D |
| 76 | U | U | F | F | F | F | F | F | F | F | F | D | D | D |
| 77 | U | U | U | F | F | F | F | F | F | F | F | D | D | D |
| 78 | U | U | U | U | U | U | U | U | U | U | U | U | F | D |
| 79 | U | U | U | U | U | U | U | U | U | U | U | F | F | D |
| 80 | U | U | U | U | U | U | U | U | U | U | F | F | F | D |
| 81 | U | U | U | U | U | U | U | U | U | U | U | F | D | D |
| 82 | U | U | U | U | U | U | U | U | U | U | F | F | D | D |
| 83 | U | U | U | U | U | U | U | U | U | F | F | F | D | D |
| 84 | U | F | D | D | D | D | D | D | D | D | D | D | D | D |
| 85 | U | U | F | D | D | D | D | D | D | D | D | D | D | D |
| 86 | U | U | U | F | D | D | D | D | D | D | D | D | D | D |
| 87 | U | F | F | D | D | D | D | D | D | D | D | D | D | D |
| 88 | U | U | F | F | D | D | D | D | D | D | D | D | D | D |
| 89 | U | U | U | F | F | D | D | D | D | D | D | D | D | D |
| 90 | U | F | F | F | D | D | D | D | D | D | D | D | D | D |
| 91 | U | U | F | F | F | D | D | D | D | D | D | D | D | D |
| 92 | U | U | U | F | F | F | D | D | D | D | D | D | D | D |
| 93 | U | U | U | U | U | U | U | U | U | F | F | F | F | D |

(continued)

| Slot Format | Symbol number in a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 94 | U | U | U | U | U | U | F | F | F | F | F | F | D | D |
| 95 | U | U | U | U | U | U | F | F | D | D | D | D | D | D |
| 96 | U | U | U | U | U | U | U | D | D | D | D | D | D | D |

The MT of the IAB node may receive the number or number of symbols not used by the MT of the IAB node through 'guard-SymbolsProvided'. In the above symbols, the IAB node may perform transition between MT and DU. SCS configurations for the number of symbols can be provided by 'guardSymbol-SCS'.

The symbols in the slots of the DU serving cell of the IAB node can be set to hard, soft, or unavailable types. When a downlink, uplink, or flexible symbol is set to hard, the DU serving cell of the IAB node can sequentially transmit, receive, or perform 'transmit or receive' operations on that symbol.

When a downlink, uplink, or flexible symbol is set to soft, the DU serving cell (DU) of an IAB node may transmit, receive, or perform "transmit or receive" operation on that symbol in turn, only if the following conditions are met.

1) for the MT of the IAB node, the ability to transmit or receive by the DU of the IAB node on the soft symbol is the same as the configuration for the unavailable soft symbol; or 2) the DU of the IAB node detects a DCI format 2_5 with an AI index field value that indicates a soft symbol that is available for transmission or reception.

In other words, if a downlink, uplink, or flexible symbol is set to soft, the DU of the IAB node can sequentially transmit, receive, or perform a 'transmit or receive' operation on that symbol only in the following cases.

1) If the MT of the IAB node does not transmit or receive on the corresponding symbol, 2) The MT of the IAB Node transmits or receives on the symbol and the use of the symbol by the DU of the IAB Node does not change the transmitting or receiving of the symbol by the MT of the IAB Node, 3) The MT of the IAB node detects a DCI format 2_5 with an AI index field value indicating the available soft symbols, etc.

If a symbol is set to unavailable, the IAB node's DUs will not transmit or receive on that symbol.

If a DU of an IAB node transmits SS/PBCH block or periodic CSI-RS on a symbol in a slot, or receives PRACH or SR on a symbol, the symbol is equivalent to being set to hard.

Information about AI-RNTI and information about the payload size of DCI format 2_5 may be provided to the IAB node. Additionally, search space set configurations for monitoring PDCCH may also be provided.

The following information may be provided to the DU of the IAB node. 1) ID of the DU serving cell of the IAB node, 2) location of the availability indication (AI) index field within DCI format 2_5, 3) availability combination set, each availability combination within the availability combination set may include the following information, i) Information indicating the availability of soft symbols in one or more slots for the DU serving cell of the IAB node, ii) Information related to the mapping between the soft symbol availability combination and the corresponding AI index field value in DCI format 2_5.

The random access preamble may be transmitted only on the time resource provided by the higher layer parameter (prach-ConfigurationIndex), and may be set differently depending on FR1 or FR2 and spectrum type.

In this disclosure, proposed is a method for setting the resource granularity (unit) required for multiplexing the MT and DU of an IAB node using different frequency resources.

In this disclosure, proposed is a method in which the MT and DU of an IAB node perform multiplexing (simultaneous operation) through FDM using a bandwidth part (BWP) composed of different frequency resources.

In the existing IAB node, TDM operation was performed in which DU and MT operated through different time resources. On the other hand, for efficient resource operation, it is required to perform resource multiplexing such as SDM/FDM and FD (full duplexing) between DU and MT.

As mentioned above, a link between an IAB node (specifically an IAB MT) and a parent node (specifically a parent DU) is called a parent link, and a link between an IAB node (specifically an IAB DU) and a child node (specifically a child MT) is called a child link. At this time, in existing technology, TDM operation between parent link and child link was discussed. Currently, SDM/FDM and FD operations between parent and child links are being discussed.

The transmission/reception timing arrangement method of the IAB node that can be considered in the IAB environment may be as follows.

1. Timing alignment case 1 (hereinafter, it can be abbreviated as case 1)

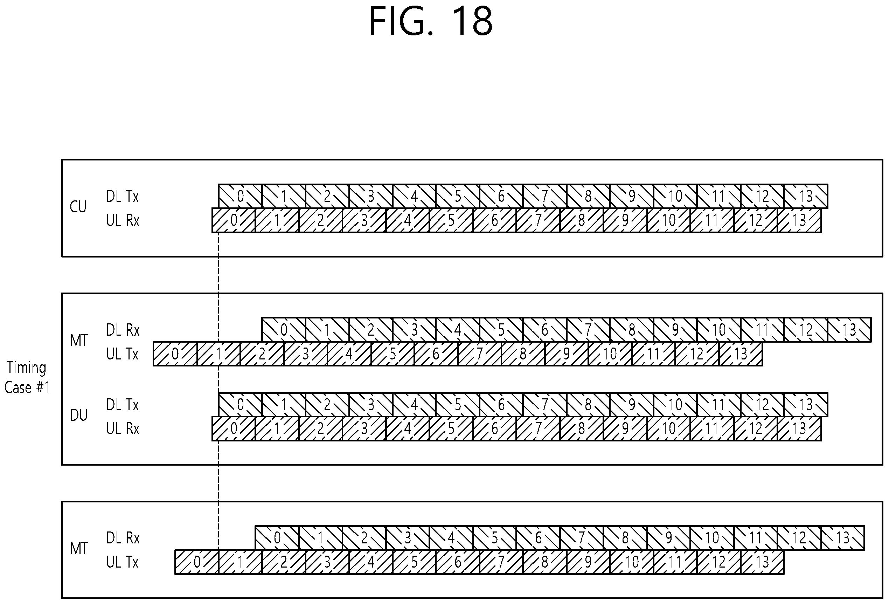

FIG. 18 illustrates timing alignment case 1.

Referring to FIG. 18, timing alignment case 1 is a case where the downlink transmit timing is aligned across IAB-nodes and IAB-donors. The timing of downlink (DL) transmissions of DUs between IAB nodes is aligned, which is the timing alignment scheme used by traditional IAB nodes.

If DL Tx (transmit) and UL Rx (receive) are not well aligned in the parent node, the child node may need additional information about alignment to properly set the DL Tx timing. The MT Tx timing can be expressed as 'MT Rx timing - TA' and the DU Tx timing can be expressed as 'MT Rx timing - TA/2 - T_delta'. The T_delta value can be obtained from the parent node.

2. Timing alignment case 6 (hereinafter it can be abbreviated as case 6)

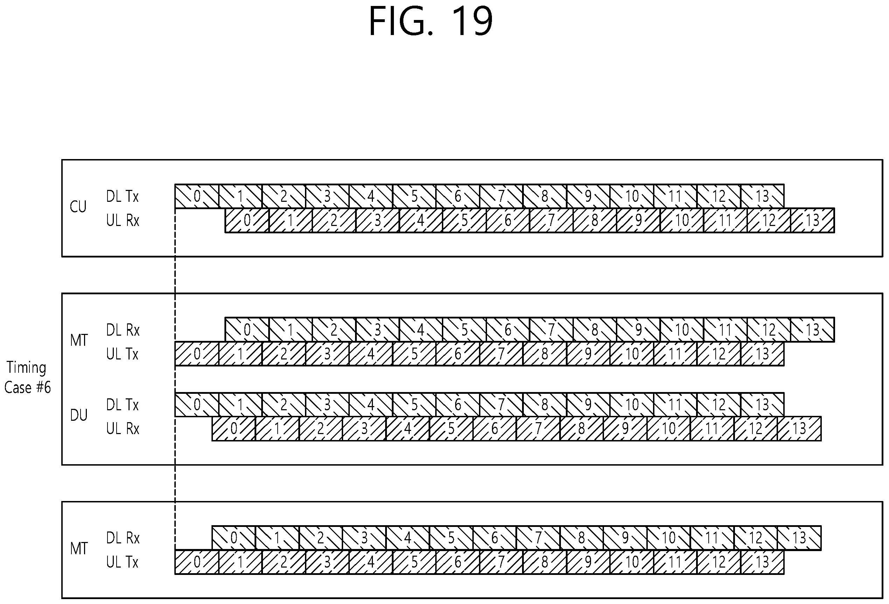

FIG. 19 illustrates timing alignment case 6.

Referring to FIG. 19, case 6 is a method in which the MT UL Tx timing and DU DL Tx timing of the IAB node are aligned. The DL transmit timing for all IAB nodes may be aligned with the parent IAB node or donor DL timing, and the UL transmit timing of an IAB node may be aligned with the DL transmit timing of an IAB node.

Since the UL Tx timing of the MT is fixed, the UL Rx timing of the parent-DU receiving it is delayed by the propagation delay of the parent-DU and MT relative to the UL Tx timing of the MT. The MT's UL Rx timing varies depending on the child MT transmitting the UL. If the IAB node uses timing alignment case 6, the UL Rx timing of the parent node will be different than before, so the parent node needs to be aware of this information if the IAB node wants to use timing alignment case 6.

3. Timing alignment Case 7 (may be abbreviated as Case 7 hereafter)

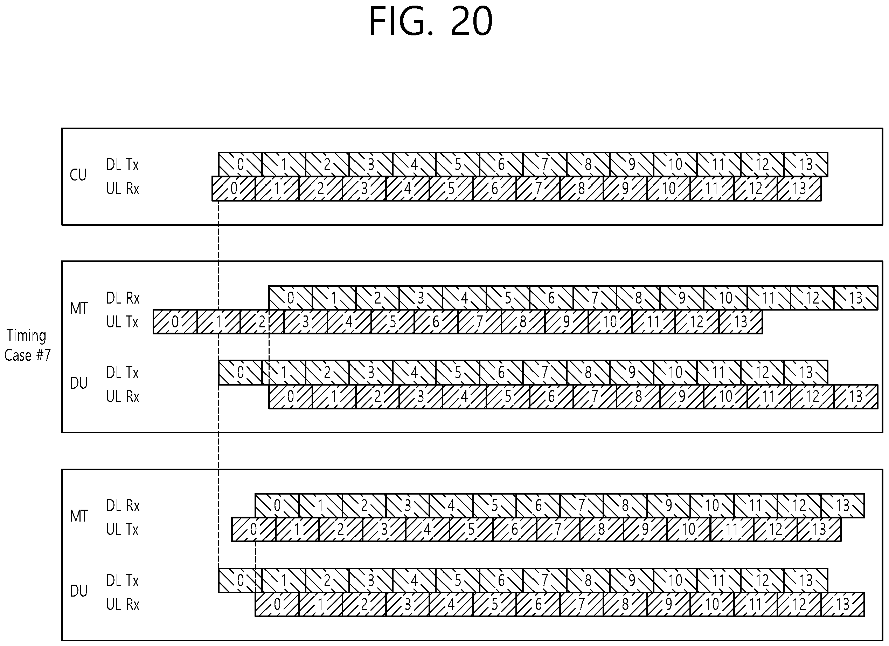

FIG. 20 illustrates timing alignment case 7.

Referring to FIG. 20, case 7 is a method in which the MT DL Rx timing and DU UL Rx timing of the IAB node are aligned. DL transmit timing for all IAB nodes may be aligned with the parent IAB node or donor DL timing. The UL reception timing of the IAB node may be aligned with the DL reception timing of the IAB node. If DL Tx and UL Rx are not well aligned in the parent node, child nodes may need additional information about alignment to properly set DL Tx timing.

The transmission and reception timing from the MT perspective is the same as the existing IAB node (Rel-16 IAB node), and the DU's UL Rx timing can be adjusted to the MT's DL Rx timing. The IAB node needs to adjust the TA of its child MTs so that the child MTs transmit UL signals according to the IAB node's UL Rx timing.

This timing alignment method may not reveal any differences in the standard operation of the IAB node compared to the existing timing alignment method (Case 1). Therefore, timing alignment case 7 can also be replaced/interpreted as timing alignment case 1.

In the present disclosure, timing alignment may mean slot-level alignment or symbol-level alignment.

The content of this disclosure is described assuming an in-band environment, but can also be applied to an out-band environment. The disclosure is also described in light of an environment where the donor gNB, relay node (RN), and UE operate in half-duplex, but may also be applicable to an environment where the donor gNB, relay node (RN), and/or UE operate in full-duplex.

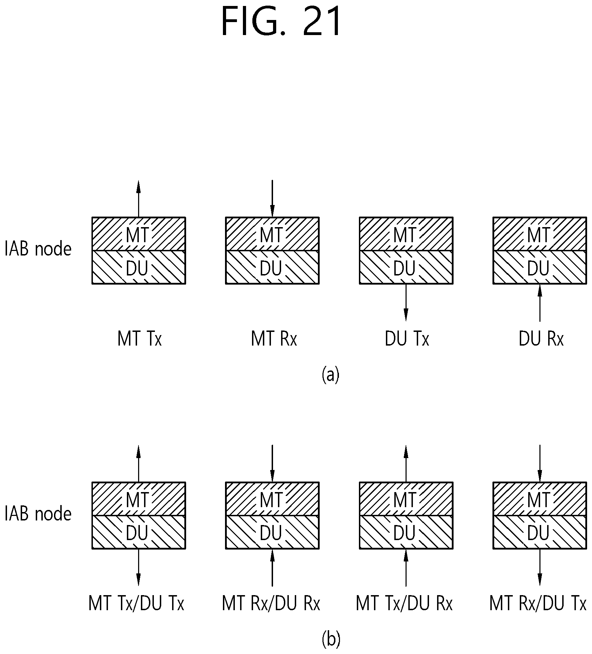

FIG. 21 illustrates non-simultaneous operation or simultaneous operation between MT and DU of an IAB node.

Referring to (a) of FIG. 21, the MT and DU of the IAB node, at some point, the MT transmits (MT Tx), the MT receives (MT Rx), the DU transmits (DU Tx), or the DU receives (DU Rx) operation can be performed. That is, the MT and DU of the IAB node can perform non-simultaneous operations.

Referring to (b) of FIG. 21, the MT and DU of the IAB node, at some point, the MT transmits (MT Tx) and the DU transmits (DU Tx) at the same time (this is simply referred to as MT transmits (MT Tx)/ DU transmits (DU Tx)), MT receives (MT Rx)/DU receives (DU Rx), MT transmits (MT Tx)/DU receives (DU Rx), MT receives (MT Rx)/DU transmits (DU Tx) operations can be performed. In other words, the MT and DU of the IAB node can perform simultaneous operations.

For simultaneous operation of MT and DU, it can be assumed that MT and DU have independent antenna panels and that the amount of interference between antenna panels is negligible. In this environment, it can be assumed that the parent link and child link are physically separated, so simultaneous Tx and/or Rx can be performed without interference between links. In this case, timing alignment for simultaneous Tx and/or Rx may not be necessary.

Meanwhile, an environment in which the antenna panels of the MT and DU are placed together or the MT and DU share the antenna panel can also be considered. In this case, for simultaneous operation of MT and DU, the effect of interference between parent and child links should be considered. In this environment, the following multiplexing methods can be considered depending on the combination of transmission directions of MT and DU.

A. MT-Tx/DU-Tx or MT-Rx/DU-Rx

(1) SDM

Simultaneous Tx or Rx between MT and DU can be performed in SDM method. For receiver-side SDM, orthogonality between downlink DMRS and uplink DMRS is important to successfully separate the two Rx signals. It is required of timing alignment between MT-Rx and DU-Rx for the DMRS orthogonality.

When MT and DU receive PDSCH and PUSCH, respectively, DMRS for PDSCH and DMRS for PUSCH can be assigned orthogonally. Therefore, the IAB node can receive both channels simultaneously. However, SDM for other combinations of DL and UL channels may not be appropriate because orthogonal DMRS allocation is not available. Therefore, SDM for simultaneous reception can be used in limited cases such as PDSCH and PUSCH reception.

(2) FDM

FDM could be another option for simultaneous Tx or Rx between MT and DU within the carrier bandwidth. One important way to ensure that parent and child links utilize different frequency resources is to separate the frequency resources at the BWP level. For example, when the MT of the IAB node performs uplink transmission within the uplink BWP, the DU of the IAB node can utilize the downlink BWP composed of frequency resources that do not overlap with the MT's uplink BWP.

Even if the frequency resources for the parent link and the child link are separated, the received signals of the parent link and the child link may interfere with each other depending on the amount of interference emission for adjacent frequency resources. If the interference level is not low enough, Rx timing alignment between MT and DU may be required. However, if the Rx power between the MT and DU is appropriately coordinated and an appropriate amount of guard resources is assumed between the frequency resources of the MT and DU, timing alignment between the MT and DU Rx may not be necessary.

B. Full duplex for MT-Tx/DU-Rx or MT-Rx/DU-Tx

For simultaneous transmission and reception between MT and DU, intra-device interference (i.e., interference from MT-Tx to DU-Rx, or DU-Tx to MT-Rx) should be considered. Compared to inter-receive interference in simultaneous reception, IAB nodes may experience stronger interference because the transmit signal reaches the receive antenna without path loss. Therefore, the level of interference for adjacent frequency resources may be much higher than in the case of simultaneous reception. Therefore, such interference may occur not only when MT and DU share frequency resources, but also when they utilize separate frequency resources. To apply interference mitigation techniques to solve in-device interference problems, interference mitigation techniques can be performed where timing alignment between DU and MT is a basic requirement.

Below, it will be described how the MT and DU of the IAB node perform multiplexing using the FDM method using different frequency resources.

IAB-DU may receive hard (H), soft (S), and/or not available (NA) information about frequency resources from the donor node/CU. Specifically, H, S, and NA resources may mean the following.

Hard (H): Refers to a frequency resource that allows DU to transmit and receive.

NA: Refers to frequency resources on which DU cannot transmit or receive.

Soft (S): A frequency resource whose availability for transmission or reception by DU has not been determined, meaning a resource whose availability for transmission or reception by DU is determined dynamically and explicitly and/or implicitly by further instruction or by the use of the IAB-MT.

IAB-DU can transmit and receive on frequency resources that are set as hard. In these frequency resources, IAB-MT operating as FDM with IAB-DU does not transmit or receive.

IAB-DU does not perform transmission or reception on frequency resources set to NA. In these frequency resources, IAB-MT operating as FDM with IAB-DU can perform transmission and reception.

An IAB-DU can perform transmissions and receptions on a frequency resource configured as soft when it is indicated to be available by additional signaling. Alternatively, even if a frequency resource configured as soft is not indicated as available by additional signaling, the IAB-DU can transmit or receive on that resource if it does not interfere with the IAB-MT's transmission or reception. IAB-MT operating as FDM with IAB-DU on this frequency resource does not perform transmission or reception when the corresponding frequency resource is indicated as available to DU by additional signaling. Otherwise, IAB-MT can use the corresponding frequency resource for transmission and reception. At this time, additional signaling indicating the availability of DU soft resources is hereinafter referred to as frequency domain availability indication.

A. The minimum resource size for configuring the frequency domain resource granularity.

Frequency domain attribute (H/S/NA) configurations for the IAB node may be provided separately in addition to time domain attribute (H/S/NA) configurations. In this case, frequency domain attribute (H/S/NA) configurations may be set on a portion of the time resource. In the frequency domain, semi-static configurations of H/S/NA can be provided for each D/U/F resource type and RB set within a slot.

From the perspective of setting frequency domain attributes (H/S/NA), the minimum resource size for setting frequency domain resource granularity/unit may be a set of N resource blocks. The N may be set by a network, and a candidate value of N may be, for example, {2, 4, 8, 18, 32, 64}. In this case, N may be at least the number of PRBs corresponding to the number of PRBs in the RBG of the MT.

For example, if the number of PRBs in the RBG of the MT is 8, N may be any one of {8, 18, 32, 64}.

Section A.1. Constraints on the value of N being the minimum granularity size/unit

Frequency domain resources used for MT transmission and reception can be set based on RBG units. Therefore, in order for DU and MT to efficiently share and use frequency resources, it is desirable that the granularity/unit of frequency resources used by DU is equal to or larger than the size of the MT's RBG. Therefore, the size of N, which is the minimum granularity/unit used to set the frequency domain attributes (H/S/NA) of the DU, can be limited to be equal or greater than the number of PRBs constituting the RBG of the corresponding MT that performs FDM operation with the corresponding DU. In other words, when the network sets the value of N, the value of N should be equal to or greater than the number of PRBs that comprise the RBG of the corresponding MT. The number of PRBs comprising the RBG is called the RBG size.

The value of N set for a DU can be set as follows.

1) The DU assumes that the value of N set for it is set to a value equal to or greater than the RBG size of the corresponding MT.
2) If the value of N set for the DU is less than the RBG size of the corresponding MT, the DU applies the MT's RBG size as the value of N.
3) The minimum value of N that the network can set for a DU is limited to the RBG size of the MT, i.e., among the candidates in {2, 4, 8, 18, 32, 64}, any value smaller than the RBG size of the MT is a possible N value.

In this case, a corresponding MT of a specific DU (of a DU cell) may mean an MT that performs simultaneous operations with the DU using FDM and/or SDM methods.

Section A.2. RBG size of the corresponding MT to determine the N value

The size of the RBG may be determined differently depending on the BWP of the MT. For example, the size of the RBG at a specific BWP may be determined by the size of the BWP, as shown in the table below.

[Table 7]

| Bandwidth Part Size | Configuration 1 | Configuration 2 |
| --- | --- | --- |
| 1 - 36 | 2 | 4 |
| 37 - 72 | 4 | 8 |
| 73 - 144 | 8 | 16 |
| 145 - 275 | 16 | 16 |

If an MT has multiple BWPs, the MT's RBG size may vary depending on the MT's BWP. The BWP applied to the MT may vary semi-statically or dynamically, so the RBG size applied to the MT may also change. In this case, ambiguity may arise as to which RBG size should be considered to determine the RBG size of the MT that should be considered to determine the value of N. Considering this, the RBG size of the corresponding MT, which is used to determine the value of N for a specific DU, may mean the following.

1) The RBG size of the MT refers to the RBG size of the default BWP of the MT.
2) The RBG size of the MT refers to the maximum value among the RBG sizes according to the BWP of the MT. For example, when two BWPs, BWP1 and BWP2, are set for MT, and the RBG size applied to BWP1 is 4 and the RBG size applied to BWP2 is 8, MT's RBG size means 8, which is the maximum between 4 and 8.

3) The RBG size of the MT may mean the RBG size of the BWP with the lowest index among the BWPs set for the MT. Alternatively, the RBG size of the MT may mean the RBG size of the BWP with the highest index among the BWPs set for the MT.

4) The RBG size of the MT refers to the RBG size of the BWP applied to the MT at the time the frequency domain H/S/NA of the DU is set.

Section A.3. Determination of N value according to DL and UL

Additionally, the MT's BWP size may be set differently for DL and UL. Therefore, the RBG size of MT may also have different values for DL and UL. In this case, the size of N, the minimum granularity/unit used to set the frequency domain H/S/NA of the DU, may also have different values for DL and UL. This can cause confusion. Considering this, the value of N set for DU can be determined as follows.

1) The value of N can be set independently for DL and UL. That is, the value of N applied to DL and the value of N applied to UL are set separately.

2) One N value commonly applied to DL and UL can be set. In this case, the RBG size of the corresponding MT, used to determine the value of N, may mean the following.

a) The RBG size of the MT can be determined based on the DL BWP, i.e., the RBG size of the corresponding MT can be determined based on the DL.

b) MT's RBG size may mean the larger of the RBG size based on DL BWP and the RBG size based on UL BWP. That is, after determining the RBG size of the corresponding MT based on DL and the RBG size of the corresponding MT based on UL, the larger value of the two can be determined as the RBG size of the MT.

In Section A.3, the RBG size of the corresponding MT can be adapted/referenced from what is proposed in Section A.2. above.

Section A.4. RBG size of the corresponding MT considering multi-carrier

Considering the multi-carrier environment, there may be multiple serving cells for MT in an FDM relationship with DU cell. In this case, ambiguity may arise as to which serving cells should be considered for RBG size. When there are a plurality of serving cells in an FDM relationship with a specific DU cell, the RBG size of the corresponding MT used to determine the value of N of a specific DU can be determined as follows.

1) When an MT has multiple serving cells, the RBG size can be determined based on the primary cell (PCell) of the MT.

2) When the MT has multiple serving cells, the RBG size can be determined based on the serving cell with the lowest index among all serving cells (or among serving cells that should operate as FDM with DU). Alternatively, the RBG size can be determined based on the serving cell with the highest index among all serving cells (or among serving cells that should operate as FDM with DU).

3) When an MT has multiple serving cells, information about the serving cell on which the RBG size is based can be configured from the network. In this case, the DU can determine the RBG size based on the serving cell.

4) When an MT has multiple serving cells, for all serving cells (or serving cells that need to operate as FDM with DU), the RBG size can be determined for each serving cell, and the maximum of these can be determined as the RBG size of the MT.

B. The composition of the minimum resource size for configuring the frequency domain resource granularity

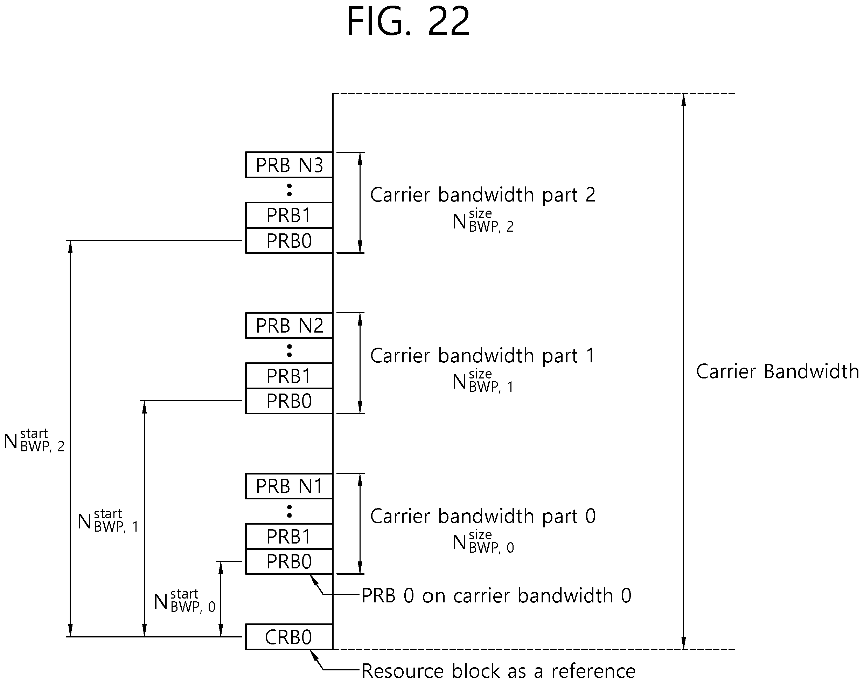

FIG. 22 illustrates the bandwidth part (BWP).

Referring to FIG. 22, in a future wireless communication system, various numerologies (e.g., various subcarrier spacings) may be supported for the same carrier. A common resource block (CRB) can be defined for a given numerology on a given carrier.

A bandwidth part may also be referred to as a carrier bandwidth part. A bandwidth part is a set of consecutive physical resource blocks (PRBs) selected from consecutive subsets of common resource blocks (CRBs) for a given numerology on a given carrier.

As shown in FIG. 22, a common resource block (CRB) can be determined depending on the numerology for which carrier band, for example, which subcarrier spacing is used. The common resource block can be indexed (starting from 0) from the lowest frequency of the carrier band, and a resource grid (which may be referred to as a common resource block resource grid) with the common resource block as a unit can be defined.

The bandwidth part (BWP) may be indicated based on the CRB with the lowest index (let's call it CRB 0 or CRB#0). CRB 0 (CRB#0) with the lowest index is also called point A.

For example, given a given numerology of a given carrier, the bandwidth part i can be indicated by $N_{BWP,i}^{start}$ and $N_{BWP,i}^{size}$. $N_{BWP,i}^{start}$ can specify the starting CRB of BWP i relative to CRB 0 (CRB#0), and $N_{BWP,i}^{size}$ can specify the size of BWP i in the frequency domain (e.g., in PRB units). PRBs within each BWP can be indexed starting from 0. The index of the CRB within each BWP may be mapped to the index of the PRB. For example, it may be mapped as $nc_{RB} = n_{PRB} + N_{BWP,i}^{start}$.

The UE can be configured with up to four downlink bandwidth parts in the downlink, but only one downlink bandwidth part can be activated at a given time. The UE does not expect to receive PDSCH, PDCCH, CSI-RS, etc. in other than the active downlink bandwidth part among the downlink bandwidth parts. Each downlink bandwidth part may include at least one CORESET.

The UE can be configured with up to four uplink bandwidth parts in the uplink, but only one uplink bandwidth part can be activated at a given time. The UE does not transmit PUSCH, PUCCH, etc. outside the active uplink bandwidth part among the uplink bandwidth parts.

Meanwhile, the RBG configuration of the MT of the IAB node is based on the location of CRB#0. By configuring the RBG grid starting from CRB#0, MT has a common RBG grid regardless of BWP.

When the RBG size for a specific BWP of an MT is P, the number of RBGs existing in the BWP and the number of RBGs constituting each RBG are as follows.

For a downlink bandwidth part (BWP) i consisting of $N_{BWP,i}^{size}$ PRBs, if the starting point of the BWP i is $N_{BWP,i}^{start}$ and the RBG size for the BWP i is given by P, the total number of RBGs ($N_{RBG}$) can be given by below equation.

[Equation 1]

$$N_{RBG} = \left\lceil \left( N_{BWP,i}^{size} + \left( N_{BWP,i}^{start} \bmod P \right) \right) / P \right\rceil$$

In this case, the size of the first RBG ($RBG_0^{size}$) can be given as the following equation.

[Equation 2]

$$RBG_0^{size} = P - N_{BWP,i}^{start} \bmod P$$

And, the size of the last RBG ($RBG_{last}^{size}$) can be given as the following equation.

[Equation 3]

$$RBG_{last}^{size} = \left( N_{BWP,i}^{start} + N_{BWP,i}^{size} \right) \bmod P \ \ if \ \left( N_{BWP,i}^{start} + N_{BWP,i}^{size} \right) \bmod P > 0 \ \ and \ P$$

otherwise

Among the $N_{RBG}$ RBGs, the size of the remaining RBGs is equal to P.

That is, starting from CRB#0, every P RBs are grouped. Among these, PRBs mapped to the same group for RBs included in the BWP constitute each RBG.

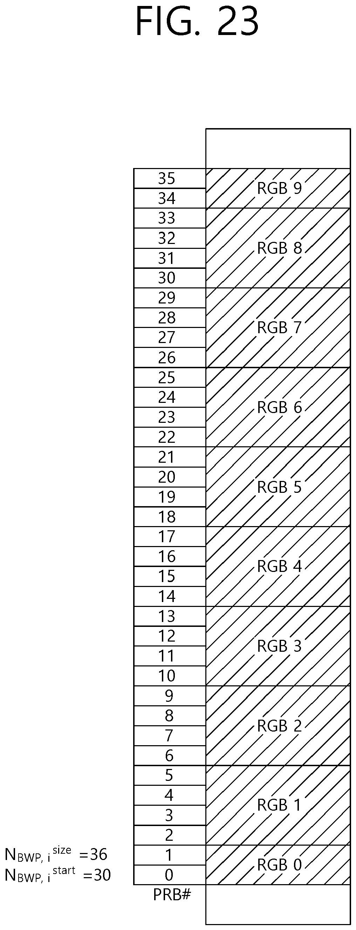

FIG. 23 shows an example of configuring the RBG of an MT.

Referring to FIG. 23, the start RB position ($N_{BWP,i}^{start}$) constituting the BWP of the MT is, for example, CRB#30, the BWP size ($N_{BWP,i}^{size}$) is 36 RBs (PRBs), and P=4. In this case, the RBG grid is divided into P=4 RBs based on CRB#0. Among these RBGs, PRBs included in the BWP and belonging to the same RBG constitute RBGs for the BWP.

Therefore, even if the set P (i.e., the size of one RBG) for the BWP size is, for example, P=4, the first RBG and/or the last RBG may consist of fewer PRBs than P=4. In the example in FIG. 23, the first RBG and the last RBG are sized to be 2 PRBs.

Meanwhile, when the minimum resource granularity/unit size for DU's frequency domain H/S/NA configuration is N, there is a need to discuss how to configure N PRBs. In other words, when grouping N PRBs into each group (for convenience, let's call this an RB set) to set the frequency domain H/S/NA of the DU, it is necessary to specifically determine the configuration of the N PRBs.

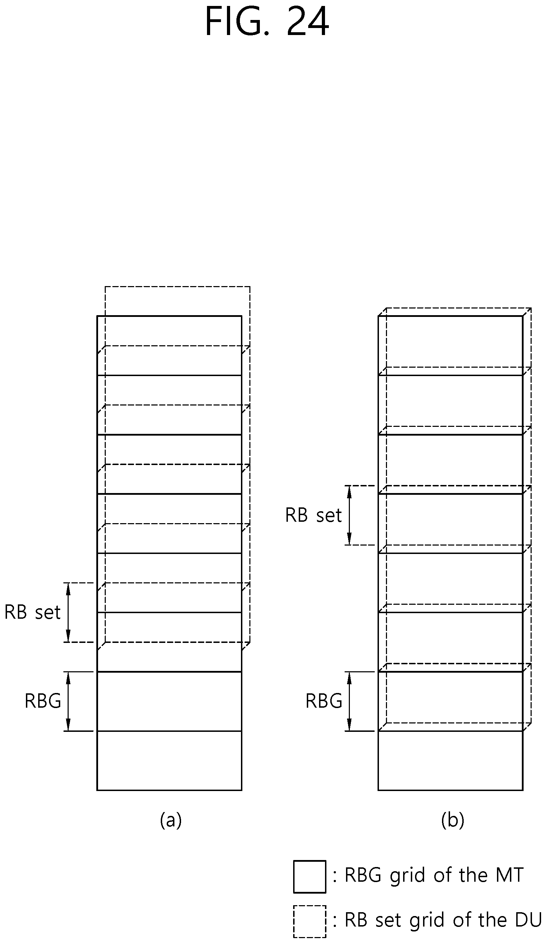

FIG. 24 illustrates that the RBG grid of the MT and the RB set grid of the DU are configured to match or deviate depending on the positions of CRB#0 of the DU and CRB#0 of the MT.

Referring to FIG. 24, N PRBs (RB set) may be composed of N consecutive RBs based on (starting from) CRB#0 of the DU. The location of CRB#0 of the DU and the location of CRB#0 of the MT may be independent of each other. In this case, if the CRB#0 position of the MT and the CRB#0 position of the DU are different, the resource granularity/unit (i.e., the RB set grid) for the frequency domain H/S/NA configuration of the DU and the corresponding RBG grid of the MT may be configured inconsistently with each other, as shown in (a) of FIG. 24.

Therefore, to prevent this, the N PRBs (RB set) of the DU can be configured based on the CRB#0 position of the corresponding MT. That is, N PRBs (RB set) for DU's frequency domain H/S/NA configuration may be composed of N consecutive RBs based on (starting from) the CRB#0 position of the corresponding MT. Then, as shown in (b) of FIG. 24, the resource granularity/unit (i.e., RB set grid) for DU's frequency domain H/S/NA configuration and the RBG grid of the corresponding MT do not deviate from each other.

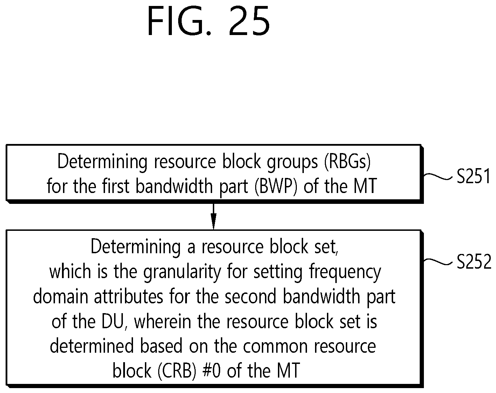

FIG. 25 illustrates a method of operating an IAB node including a distributed unit (DU) and a mobile terminal (MT) in a wireless communication system.

The IAB node determines resource block groups (RBGs) for the first bandwidth part (BWP) of the MT (S251).

For example, the first BWP is called BWP i, the size of BWP i is $N_{BWP,i}^{size}$ physical resource blocks (PRBs), the start PRB of BWP i is $N_{BWP,i}^{start}$, and the RBG size for the BWP i is P, the total number of RBGs ($N_{RBG}$) for the first BWP is given by

$$N_{RBG} = \left\lceil \left( N_{BWP,i}^{size} + \right. \right.$$

$$\left. \left( N_{BWP,i}^{start} \bmod P \right) \right) / P \right\rceil.$$

Among the $N_{RBG}$ RBGs, the size of the first RBG ($RBG_0^{size}$) is $RBG_0^{size} = P - N_{BWP,i}^{start} \bmod P$ and the size of the last RBG ($RBG_{last}^{size}$) is given by the following equation.

[Equation 4]

$$RBG_{last}^{size} = \left( N_{BWP,i}^{start} + N_{BWP,i}^{size} \right) \bmod P \ \text{ if } \ \left( N_{BWP,i}^{start} + N_{BWP,i}^{size} \right) \bmod P > 0 \ \text{ and } P$$

otherwise

In the $N_{RBG}$ RBGs, the size of all remaining RBGs is P. The RBGs may be determined based on the common resource block (CRB) #0 of the MT. For example, $N_{BWP,i}^{start}$, the start PRB of BWP i, may be given based on CRB#0 of the MT.

The IAB node determines a resource block set, which is the granularity for setting frequency domain attributes for the second bandwidth part of the DU (S252). The resource block set is determined based on the common resource block (CRB) #0 of the MT. That is, the resource block set may be determined based on CRB#0 of the MT rather than CRB#0 of the DU. The resource block set may include N (N is a natural number) physical resource blocks (PRBs).

The frequency domain attribute configuration for the second bandwidth part may be information indicating whether a specific frequency resource is set to hard, soft, or not available for the DU.

Meanwhile, considering the multi-carrier environment, there may be multiple serving cells for MT in an FDM relationship with DU cell. At this time, the MT may have a different CRB #0 location for each serving cell. In this case, it is necessary to determine how to determine the CRB#0 location of the corresponding MT, which is used to determine the constitution of N PRBs for DU's frequency domain H/S/NA configuration.

When there are multiple serving cells in FDM relationship with a specific DU cell, the CRB#0 position of the corresponding MT used to determine the configuration of the N PRBs for the frequency domain H/S/NA setup of a specific DU can be determined as follows.

1) When an MT has multiple serving cells, the location of CRB#0 can be determined based on the MT's primary cell. That is, when a plurality of serving cells are set for the MT, the position of the CRB#0 can be determined based on the primary cell among the plurality of serving cells.

2) When the MT has multiple serving cells, the CRB#0 location can be determined based on the serving cell with the lowest index among all serving cells (or among serving cells that should operate as FDM with DU). Alternatively, the CRB#0 location can be determined based on the serving cell with the highest index among all serving cells (or among serving cells that should operate as FDM with DU).

3) When the MT has multiple serving cells, information about the serving cell on which the CRB#0 location is based may be configured from the network. In this case, the DU can determine the location of CRB#0 relative to its serving cell.

4) The location of the reference RB used to determine the configuration of N PRBs for setting the frequency domain H/S/NA of a specific DU can be set from the network. In this case, N PRBs for DU's frequency domain H/S/NA configuration can be configured based on the corresponding reference RB location. In other words, N PRBs for configuring the frequency domain H/S/NA of the DU may be composed of N consecutive RBs based on (starting from) the corresponding set position.

Meanwhile, the MT's RBG grid may be configured differently depending on the MT's serving cell. Therefore, even if the grid of N PRBs for the frequency domain H/S/NA setup of the DU is configured based on CRB#0 for a specific serving cell of the MT, it may not match the RBG grid of the MT for other serving cells. In this case, the IAB node needs to assume that the network properly sets the CRB#0 locations of the multiple serving cells to prevent this from happening.

According to a method of the present disclosure, in an IAB node including an MT and a DU, a set of RBs for frequency domain H/S/NA configurations of the DU and RBGs of the MT are aligned to prevent unnecessary interference from occurring. Furthermore, in an IAB node comprising an MT and a DU, when the MT and the DU perform simultaneous operations such as FDM, the efficiency of the FDM operation is increased.

In the following, proposed is how to change/determine the multiplexing operation mode when the multiplexing operation mode applied to an IAB node is switched.

For IAB operation, the MAC entity of the DU of the IAB node or the DU of the donor node reserves a sufficient number of symbols at the beginning and/or end of the slot in which the child node transitions operation/function from DU to MT and from MT to DU. The MAC entity of the IAB node's DU or the donor node's DU can inform the child node of the number of guard symbols through 'Provided Guard Symbols MAC CE'. The MT of the child node can inform the DU of the parent node or the DU of the donor node of the number of guard symbols it desires through 'Desired Guard Symbols MAC CE'.

Upon receiving 'Provided Guard Symbols MAC CE', the MAC entity may need to do the following.

- Indicates the number of guard symbols provided and the SCS configuration for the indicated serving cell to the lower layer.

The MAC entity may trigger a 'Desired Guard Symbol' query for this serving cell if the 'Desired Guard Symbol' query is not triggered.

If the MAC Entity has UL resources allocated for new transmissions, the MAC Entity shall, for each 'Desired Guard Symbol' query that is triggered and not canceled, direct the multiplexing and assembly procedures to generate a 'Desired Guard Symbols MAC CE' if the allocated UL resources can accommodate the 'Desired Guard Symbols MAC CE' and subheader, and cancel this 'Desired Guard Symbol' query.

A separate value for the number of guard symbols may be specified for each of the following eight switching scenarios. The table below illustrates the number of guard symbols for each switching scenario.

[Table 8]

| Switching scenario | | Field for number of guard symbols in MAC CE |
|---|---|---|
| Switching from IAB-MT operation to IAB-DU operation | MT Rx to DU Tx | $NmbGS_1$ |
| | MT Rx to DU Rx | $NmbGS_2$ |
| | MT Tx to DU Tx | $NmbGS_3$ |
| | MT Tx to DU Rx | $NmbGS_4$ |

(continued)

| Switching scenario | | Field for number of guard symbols in MAC CE |
|---|---|---|
| Switching from IAB-DU operation to IAB-MT operation | DU Rx to MT Tx | $NmbGS_5$ |
| | DU Rx to MT Rx | $NmbGS_6$ |
| | DU Tx to MT Tx | $NmbGS_7$ |
| | DU Tx to MT Rx | $NmbGS_8$ |

In this specification, a BWP may start from a specific common resource block (CRB) and may be characterized by a numerology such as subcarrier spacing and CP, and a set of consecutive resource blocks in the numerology.

The device can be configured with up to 4 downlink bandwidth parts (BWP) and up to 4 uplink bandwidth parts (BWP) for each serving cell. For supplementary uplink (SUL) operation, there may be up to four additional uplink bandwidth parts on the additional uplink carrier.

CORESET configurations obtained from PBCH can define and activate the initial bandwidth part (BWP) in downlink. The initial active uplink bandwidth part can be obtained from scheduled system information using the downlink PDCCH.

In each serving cell, the downlink bandwidth part that is set at a given moment is called the active downlink bandwidth part for the serving cell, and the uplink bandwidth part that is set is called the active uplink bandwidth part for the serving cell.

The base station can use downlink control signaling to activate and deactivate bandwidth parts. Thus, rapid switching between different bandwidth parts can be achieved.

In the downlink, the device is not assumed to be able to receive the base station's downlink data transmission (more specifically PDCCH or PDSCH) outside of the active bandwidth part. Additionally, the numerology of the PDCCH and the PDSCH is limited to the numerology set for the bandwidth part. In the prior art, multiple BWPs cannot be active at the same time, so the device can only receive a signal by one numerology at a time.

In the uplink, the device transmits PUSCH and PUCCH only in the active uplink bandwidth part.

Based on the foregoing discussion, the present disclosure proposes a method for changing and determining a multiplexing operation mode when the multiplexing operation mode applied to an IAB node is switched.

In the following, the term network may be interpreted as being replaced by gNB or CU/DU.

The timing mode used in this disclosure refers to the timing case, timing alignment case, etc. described above.

An IAB-node may have several multiplexing operation modes, such as non-simultaneous operation between MT and DU (e.g., TDM), simultaneous transmit/transmit (Tx/Tx), simultaneous transmit/receive (Tx/Rx), simultaneous Rx/Tx, and simultaneous Rx/Rx. At this time, the IAB-node does not continuously operate in only one multiplexing operation mode, but may operate by changing to different multiplexing operation modes depending on time resources.

That is, adaptation of the multiplexing operation mode of the IAB-node can be achieved. At this time, as the multiplexing operation of the IAB-node changes, the timing mode applied by the IAB-node may also change depending on time resources. The IAB-node may have timing modes such as timing mode 1, timing mode 6, and/or timing mode 7, and the timing mode applied to the IAB-node may change depending on time resources.

In this way, when the multiplexing operation mode applied to the IAB node is switched and operated, proposed are the method for the IAB node to determine the multiplexing operation mode applied to itself and the operations required to match the understanding of the multiplexing operation mode applied to itself with the parent DU.

A. Explicit configuration

Even if IAB nodes have the ability to operate simultaneously, they do not always operate in non-TDM mode (i.e., simultaneous operation mode), and may need to operate in TDM mode (non-simultaneous operation mode) depending on various network situations. Considering this, information about TDM operation and non-TDM operation in terms of time resources can be explicitly set by the network.

The IAB node may be configured with information about the multiplexing operation mode applied to it from the network. These configurations may be set through RRC or F1-AP. The following information may be set through information about the multiplexing operation mode.

Alt 1. By setting the multiplexing operation mode, information about which operation the IAB node performs, either TDM (non-simultaneous operation) or non-TDM (simultaneous operation), may be set.

If the IAB node is set to operate in TDM, the IAB node may determine that non-simultaneous operation between the MT and DU is performed and operate in TDM. In this case, even if the IAB node can apply simultaneous operation between MT and DU, simultaneous operation is not allowed, and the IAB node operates in TDM regardless of whether it is capable of simultaneous operation.

If the IAB node is set to operate in non-TDM, the IAB node determines that simultaneous operation between MT and DU can be performed. In this case, the IAB node always performs simultaneous operations between MT and DU (or when simultaneous operations can be performed). On the other hand, even if it is set to operate as non-TDM, the IAB node operates as TDM if it cannot perform simultaneous operation between MT and DU.

Alt 2. By setting the multiplexing operation mode, information about which operation the IAB node performs among TDM (non-simultaneous operation), simultaneous Tx/Tx, and simultaneous Rx/Rx can be set.

If the IAB node is set to operate in TDM, the IAB node may determine that non-simultaneous operation between the MT and DU is performed and operate in TDM. In this case, even if the IAB node can apply simultaneous operation between MT and DU, simultaneous operation is not allowed, and the IAB node operates in TDM regardless of whether it is capable of simultaneous operation.

If the IAB node is set to operate with simultaneous Tx/Tx, the IAB node determines that it can perform simultaneous Tx/Tx operation between the MT and DU. In this case, the IAB node always performs simultaneous operation between MT and DU (or when it can perform simultaneous Tx/Tx). On the other hand, even if it is set to operate as non-TDM, the IAB node operates as TDM if it cannot perform simultaneous Tx/Tx between MT and DU.

When the IAB node is set to operate in simultaneous Rx/Rx, the IAB node determines that it can perform simultaneous Rx/Rx operation between the MT and DU. In this case, the IAB node always performs simultaneous operations between MT and DU (or when it can perform simultaneous Rx/Rx). On the other hand, even if it is set to operate as non-TDM, the IAB node operates as TDM if it cannot perform simultaneous Rx/Rx between MT and DU.

Alt 3. By setting the multiplexing operation mode, information about which operation the IAB node performs among TDM (non-simultaneous operation), simultaneous Tx/Tx, simultaneous Rx/Rx, simultaneous transmission/reception, and simultaneous Rx/Tx can be set.

If the IAB node is set to operate in TDM, the IAB node may determine that non-simultaneous operation between the MT and DU is performed and operate in TDM. In this case, even if the IAB node can apply simultaneous operation between MT and DU, simultaneous operation is not allowed, and the IAB node operates in TDM regardless of whether it is capable of simultaneous operation.

If the IAB node is set to operate with simultaneous Tx/Tx, the IAB node determines that it can perform simultaneous Tx/Tx operation between the MT and DU. In this case, the IAB node always performs simultaneous operation between MT and DU (or when it can perform simultaneous Tx/Tx). On the other hand, even if it is set to operate as non-TDM, the IAB node operates as TDM if it cannot perform simultaneous Tx/Tx between MT and DU.

When the IAB node is set to operate in simultaneous Rx/Rx, the IAB node determines that it can perform simultaneous Rx/Rx operation between the MT and DU. In this case, the IAB node always performs simultaneous operations between MT and DU (or when it can perform simultaneous Rx/Rx). On the other hand, even if it is set to operate as non-TDM, the IAB node operates as TDM if it cannot perform simultaneous Rx/Rx between MT and DU.

If the IAB node is set to operate with simultaneous Tx/Rx, the IAB node determines that it can perform simultaneous Tx/Rx operation between the MT and DU. In this case, the IAB node always (or when it can perform simultaneous Tx/Rx) performs simultaneous operation between MT and DU. On the other hand, even if it is set to operate as non-TDM, the IAB node operates as TDM if it cannot perform simultaneous transmission/reception between MT and DU.

If the IAB node is set to operate with simultaneous Rx/Tx, the IAB node determines that it can perform simultaneous Rx/Tx operation between the MT and DU. In this case, the IAB node performs simultaneous operation between MT and DU at all times or when it can perform simultaneous Rx/Tx. On the other hand, even if it is set to operate as non-TDM, the IAB node operates as TDM if it cannot perform simultaneous Rx/Tx between MT and DU.

When the IAB node receives the configuration information for this multiplexing operation mode, it can determine that it operates by applying the corresponding multiplexing operation mode information until the configuration information is reset. Alternatively, this configuration information may be set differently for each time resource group. When the IAB node receives this configuration information, it may determine that it operates by applying the multiplexing operation mode associated with each time resource.

If the configuration information of this multiplexing operation mode can be set differently for each time resource group, the time domain resource granularity/unit for setting the multiplexing operation mode according to time resource may be as follows.

Alt a. Slot bundle: A multiplexing operation mode can be set for a plurality of slot groups. Characteristically, the size of this slot group may be the same as the period of the TDD configuration. That is, the multiplexing operation mode can be set for a plurality of slots.

Alt b. Slot: Multiplexing operation mode can be set for each slot.

Alt c. D/F/U resource type for each slot: The multiplexing operation mode can be set based on the D/F/U resource type within each slot. At this time, the D/F/U resource type may be based on the D/F/U resource type of the DU.

B. Implicit determination

An IAB node may not always be able to perform simultaneous operations on a time resource intended for non-TDM operations (simultaneous operations), and the multiplexing operation of an IAB node on a specific time resource may be determined by a variety of factors.

1. D/U resource type at the DU and MT

The main factor that determines the multiplexing operation of the IAB node is the combination of the Tx/Rx directions of the MT and DU. The multiplexing ability of an IAB node may vary depending on the combination of Tx/Rx directions of MT and DU. Therefore, the possibility of simultaneous operation of IAB nodes may be determined according to the D/U resource types of MT and DU in a specific time resource.

However, the resource direction of the DU flexible (F) resource is dynamically determined by the DU and indicated to the child MT/UE. Therefore, the parent node cannot determine the multiplexing operation mode of the IAB node because it does not know the resource direction of the DU in the flexible (F) resource. In order for the parent node to know the multiplexing operation of the IAB node in the DU flexible (F) resource, the IAB node may need to report related information to the parent node.

2. Timing mode

The IAB node's understanding of the timing mode should be consistent with that of its parent DU, so it should be shared with the parent node in advance. For this purpose, the timing mode can be set according to the time resources of the IAB node in the network.

If it is possible for an IAB node to operate with timing different from the planned timing mode, the multiplexing operation of the IAB node may be different. If the multiplexing operation of an IAB node changes due to a dynamic change in timing mode, there may be a need to report relevant information to the parent node.

3. Power control

In the case of dynamic power sharing between MT and DU, the transmission power of the DU or MT may be reduced or transmission may not be performed depending on the power allocation between the MT and DU of the IAB node. Because of this, the IAB node may need to dynamically perform half-duplex operation on resources for which simultaneous operation is planned. In this way, the multiplexing operation of the IAB node may change dynamically due to power control issues, and there may be a need to report related information to the parent node.

Basically, during time resources for non-TDM operation (simultaneous operation), the multiplexing operation of the IAB node can be implicitly determined. For example, the multiplexing operation mode can be determined based on the resource direction of the IAB DU and MT and the timing mode of the IAB node in the corresponding resource.

In other words, even if an IAB node is configured to perform simultaneous operations on a specific time resource through configurations such as those in Section 'A. Explicit configuration' above, it may not be possible to perform simultaneous operations due to the aforementioned factors.

In resources that are determined to be unable to perform simultaneous operations, the IAB node performs non-simultaneous operation (TDM) operations. At this time, the time domain resource granularity/unit for determining the resources that should operate in TDM within the time resources allowed for the UE to perform simultaneous operations may be as follows.

Alt a. Slot: IAB node can determine whether it can operate simultaneously on a per-slot basis. In this case, if simultaneous operation is not possible only in some symbol resources of a slot, it may be determined that simultaneous operation is not possible in the entire slot.

Alt b. D/U/F resource type for each slot: IAB node can determine whether simultaneous operation is possible based on each D/U/F resource type of each slot. In this case, if simultaneous operation is not possible in only some symbol resources within each D/U/F resource type of each slot, it may be determined that simultaneous operation is not possible in the entire D/U/F resource type. At this time, the D/U/F resource type may mean the D/U/F resource type of the DU of the IAB node.

Alt c. Symbol: IAB node can determine whether its simultaneous operation is possible at each symbol-level.

C. Reporting of the applicability of the multiplexing operation mode

The multiplexing operation of an IAB node can be dynamically determined. Alternatively, the applicability of the semi-statically determined multiplexing operation may change. In this case, the IAB node can report the applicability of a given multiplexing operation mode to the parent node.

Even if a resource is a resource that allows an IAB node to perform simultaneous operations, the multiplexing operation mode that the IAB node can apply may vary due to the following dynamic factors.

In DU flexible resources, the combination of transmission/reception directions of the DU and MT of the IAB node varies depending on the U/D resource type actually applied by the DU. At this time, the simultaneous operation capability of the IAB node may vary depending on the combination of transmission/reception directions of the DU and MT of the IAB node. Therefore, in DU flexible resources, the multiplexing operation mode of the IAB node may vary depending on the U/D resource type of the DU.

The multiplexing operation mode of the IAB node may vary for power reasons, such as limitations in the Tx power of the IAB node.

If the IAB node can change its timing mode, the multiplexing operation mode of the IAB node may change due to a change in the timing mode.

If the multiplexing operation mode applied to an IAB node can change dynamically based on the situation of the IAB node, the parent DU needs to know the multiplexing operation mode applied by the IAB node to ensure smooth operation between the IAB node and the parent DU. In such cases, in the time resources allowed for the IAB Node to perform simultaneous operations, when the IAB Node determines for itself the multiplexing operation mode that applies to the IAB Node, or performs operations that differ from the predetermined/determined multiplexing operation mode as described above, the IAB Node may report information about the multiplexing operation mode applied to the IAB Node to the Parent DU. This report can be delivered from the MT of the IAB node to the parent DU through MAC CE or uplink control information (UCI).

Specifically, information about the multiplexing operation mode applied to the IAB node can be reported to the parent DU using the following method.

Reporting method 1: Report the multiplexing operation mode applied by the IAB node to the parent node

An IAB node can report information to its parent DU about the multiplexing operation mode it applies. Alternatively, when an IAB node needs to apply a different multiplexing operation mode than the one that applies to itself in a specific time resource (as described in Section "A. Explicit configuration" and/or Section "B. Implicit determination" above), it may report information about this multiplexing operation mode to its parent DU. Characteristically, this information may be different for each time resource group. That is, the IAB node can report information about the multiplexing operation mode it applies for each time resource to the parent DU.

In this case, if the IAB node reports information about the multiplexing operation mode it applies to the parent DU, it can operate by applying the multiplexing operation mode it reported without a separate confirmation procedure. Alternatively, if it is finally instructed by its parent DU to apply a multiplexing operation mode that it applies, or if it is instructed to verify a multiplexing operation mode that it has reported to itself, it may apply and operate under that multiplexing operation mode.

In this case, the determination and reporting of the multiplexing operation mode applied by these IAB nodes may be performed in the following time resource granularities/units.

Alt a. Slots: The IAB node can determine the multiplexing operation mode, applying each slot as a unit.

Alt b. D/U/F resource type per slot: The IAB node can determine the multiplexing operation mode that applies each D/U/F resource type in each slot as a unit. At this time, the D/U/F resource type may mean the D/U/F resource type of the DU of the IAB node.

Alt c: Symbol: IAB node can determine the multiplexing operation mode applied at each symbol-level.

Reporting method 2: Report the applicability of the IAB node's multiplexing operation mode to the parent node.

If an IAB node is unable to actually apply the multiplexing operation mode set for itself in a specific time resource, as described in Section "A. Explicit configuration" and/or Section "B. Implicit determination" above, the IAB node may report information to the parent DU that the set multiplexing operation mode cannot be applied. Characteristically, if the IAB node fails to actually perform simultaneous operations on resources determined to perform simultaneous operations between MT and DU, the information can be reported to the parent DU. Characteristically, this information may be different for each time resource group. That is, the IAB node can report information that the set multiplexing operation mode cannot be applied to the parent DU for each time resource unit.

In this case, the IAB node can perform TDM operation on time resources determined to be unable to apply the set multiplexing operation mode. At this time, additionally, in time resources that operate in TDM because it is determined that the multiplexing operation mode cannot be applied, the IAB node operates in TDM, so it can operate by applying timing mode 1. Alternatively, even if the IAB node operates in TDM, the IAB node may operate by applying the timing mode set or determined to be used in the corresponding resource.

At this time, determination of whether the multiplexing operation mode of the IAB node is applicable and reporting of related information can be performed in the following time resource granularity/unit.

Alt a. Slot: The IAB node may determine whether the multiplexing operation mode is applicable for each slot. In this case, if the multiplexing operation mode cannot be applied to some symbol resources of a slot, it may be determined that the multiplexing operation mode cannot be applied to the entire slot.

Alt b. D/U/F resource type for each slot: IAB node may determine whether the multiplexing operation mode is applicable based on each D/U/F resource type of each slot. In this case, if it is not possible to apply the multiplexing operation mode to some symbol resources within each D/U/F resource type of each slot, it may be determined that the multiplexing operation mode is not applicable to the entire D/U/F resource type. At this time, the D/U/F resource type may mean the D/U/F resource type of the DU of the IAB node.

Alt c: Symbol: IAB node can determine whether the multiplexing operation mode is applicable at each symbol-level.

D. Time/frequency domain H/S/NA application granularity/unit

IAB-DU may be configured with hard (H), soft (S), and/or not available (NA) information about frequency resources from the donor node/CU. In this specification, H/S/NA information may be referred to as attribute information for convenience. Specifically, H, S, and NA resources may mean the following.

Hard (H): Refers to a frequency resource that allows DU to transmit and receive.

NA: Refers to frequency resources on which DU cannot transmit or receive.

Soft (S): A frequency resource whose availability for transmission or reception by DU has not been determined, meaning a resource whose availability for transmission or reception by DU is dynamically and explicitly and/or implicitly determined by further instruction or by whether the IAB-MT uses it.

IAB-DU can perform transmission and reception on frequency resources configured as Hard. In these frequency resources, IAB-MT operating as FDM with IAB-DU does not transmit or receive.

IAB-DU does not perform transmission or reception on frequency resources set as NA. In these frequency resources, IAB-MT operating as FDM with IAB-DU can perform transmission and reception.

When the IAB-DU is indicated that a frequency resource configured as soft is available by additional signaling, it can perform transmission and reception on that resource. Alternatively, even if a frequency resource configured as soft is not indicated as available by additional signaling, the IAB-DU can perform transmission and reception as long as the resource does not interfere with transmission and reception of the IAB-MT. IAB-MT operating as FDM with IAB-DU on the frequency resource does not perform transmission or reception when the corresponding frequency resource is indicated as available to DU by additional signaling. Otherwise, IAB-MT can use the corresponding frequency resource for transmission and reception. At this time, additional signaling indicating the availability of DU soft resources may be referred to as a frequency domain availability indication.

The IAB node may determine the operating frequency resources of the IAB-DU and IAB-MT by applying the frequency domain H/S/NA configurations to the time resources performing FDM or not performing TDM (i.e., performing simultaneous operations). In this case, the IAB node may determine/determine the operating frequency resources of the IAB-DU and IAB-MT without considering the frequency domain H/S/NA configurations in time resources that are not performing FDM or performing TDM (i.e., non-simultaneous operation).

Frequency domain H/S/NA configurations for IAB nodes can be provided in addition to the existing time domain H/S/NA configurations.

When the MT and DU of the IAB node operate in FDM, the IAB node can apply the frequency domain H/S/NA configurations to determine the operating frequency resources of the DU and MT. On the other hand, applying frequency domain H/S/NA configurations when the IAB node is operating in TDM will limit the operating frequency resources of the DU and MT, even if the IAB node does not perform MT and DU operations simultaneously. Therefore, in terms of efficient resource utilization, frequency domain H/S/NA configurations may not be applicable when the IAB node is operating in TDM.

When an IAB node is provided with frequency-domain H/S/NA configuration independent of its existing time-domain H/S/NA configuration, only one of the time-domain H/S/NA configuration and the frequency-domain H/S/NA configuration can be applied in a given time resource. That is, the IAB node can switch and apply the time domain H/S/NA configuration and frequency domain H/S/NA configuration according to time resources.

At this time, the time resource granularity/unit for determining the time resource for applying the time domain H/S/NA configuration and the time resource for applying the frequency domain H/S/NA configuration and applying the configuration may be as follows.

Alt a. Slot: The IAB node can determine the applicable configuration among time domain H/S/NA configuration and frequency domain H/S/NA configuration for each slot.

Alt b. D/U/F resource type per slot: IAB node determines the applicable configuration between time domain H/S/NA configuration and frequency domain H/S/NA configuration based on each D/U/F resource type of each slot.

Alt c: Symbol: The IAB node can determine the applicable configuration among time domain H/S/NA configuration and frequency domain H/S/NA configuration at each symbol-level.

In this case, the IAB node may operate with time-domain H/S/NA configuration in time resources where MT and DU perform TDM (non-simultaneous operation) and frequency-domain H/S/NA configuration in time resources where MT and DU perform FDM and/or SDM (simultaneous operation). Therefore, the time resource granularity/unit for determining the time resource to which the time domain H/S/NA configurations are applied and the time resource to which the frequency domain H/S/NA configurations are applied, and for applying those configurations, can be the same as the granularity/unit for determining the multiplexing operation mode applied to the IAB node. In other words, once an IAB node determines which multiplexing operation mode applies to it, the IAB node can determine which of the time-domain H/S/NA configuration and frequency-domain H/S/NA configuration apply to it based on that determination.

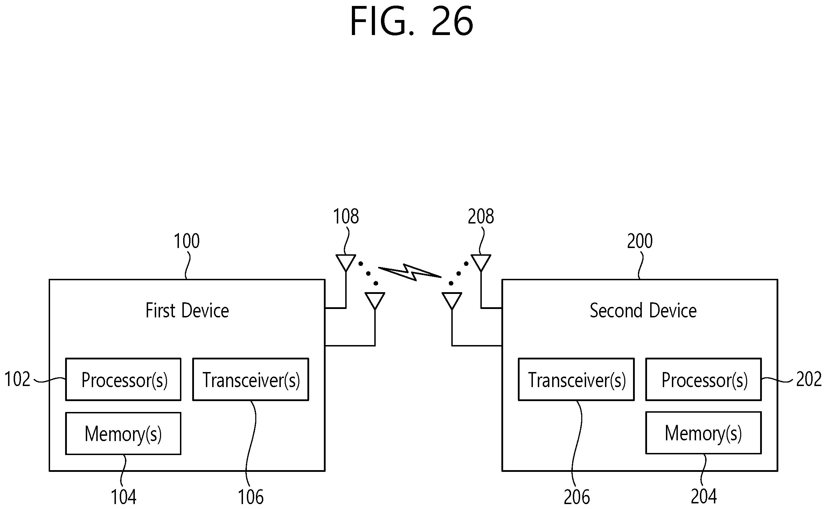

FIG. 26 illustrates a wireless device applicable to the present specification.

Referring to FIG. 26, a first wireless device 100 and a second wireless device 200 may transmit radio signals through a variety of RATs (e.g., LTE and NR).

The first wireless device 100 may include one or more processors 102 and one or more memories 104 and additionally further include one or more transceivers 106 and/or one or more antennas 108. The processors 102 may control the memory 104 and/or the transceivers 106 and may be configured to implement the descriptions, functions, procedures, proposals, methods, and/or operational flowcharts disclosed in this document. For example, the processors 102 may process information within the memory 104 to generate first information/signals and then transmit radio signals including the first information/signals through the transceivers 106. In addition, the processor 102 may receive radio signals including second information/signals through the transceiver 106 and then store information obtained by processing the second information/signals in the memory 104. The memory 104 may be connected to the processory 102 and may store a variety of information related to operations of the processor 102. For example, the memory 104 may store software code including commands for performing a part or the entirety of processes controlled by the processor 102 or for performing the descriptions, functions, procedures, proposals, methods, and/or operational flowcharts disclosed in this document. Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. The transceiver 106 may include a transmitter and/or a receiver. The transceiver 106 may be interchangeably used with a radio frequency (RF) unit. In the present specification, the wireless device may represent a communication modem/circuit/chip.

The second wireless device 200 may include one or more processors 202 and one or more memories 204 and additionally further include one or more transceivers 206 and/or one or more antennas 208. The processor 202 may control the memory 204 and/or the transceiver 206 and may be configured to implement the descriptions, functions, procedures, proposals, methods, and/or operational flowcharts disclosed in this document. For example, the processor 202 may process information within the memory 204 to generate third information/signals and then transmit radio signals including the third information/signals through the transceiver 206. In addition, the processor 202 may receive radio signals including fourth information/signals through the transceiver 106 and then store information obtained by processing the fourth information/signals in the memory 204. The memory 204 may be connected to the processor 202 and may store a variety of information related to operations of the processor 202. For example, the memory 204 may store software code including commands for performing a part or the entirety of processes controlled by the processor 202 or for performing the descriptions, functions, procedures, proposals, methods, and/or operational flowcharts disclosed in this document. Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. The transceiver 206 may include a transmitter and/or a receiver. The transceiver 206 may be interchangeably used with an RF unit. In the present specification, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202.

The one or more processors 102 and 202 may be implemented with at least one computer readable medium (CRM) including instructions to be executed by at least one processor.

That is, at least one computer readable medium (CRM) having an instruction to be executed by at least one processor to perform operations includes, determining resource block groups (RBGs) for a first bandwidth part (BWP) of a mobile terminal (MT) of an IAB node including a distributed unit (DU) and the MT, determining a resource block set which is a granularity for setting frequency domain attributes for a second BWP of the DU. Here, when the first BWP is BWP i, a size of the BWP i is $N_{BWP,i}^{size}$ physical resource blocks (PRBs), a starting PRB of the BWP i is $N_{BWP,i}^{start}$, and a size of a RBG for the BWP i is P, total number of RBGs for the first BWP ($N_{RBG}$) is given by the equation 1. Among the $N_{RBG}$ RBGs, a size of a first RBG ($RBG_0^{size}$) is given by equation 2, a size of a last RBG ($RBG_{last}^{size}$) is given by equation 3, and a size of all other RBGs is P. The resource block set is determined based on a common resource block (CRB)#0 of the MT.

The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. In addition, the one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. In addition, the one or more processors 102 and 202 may perform control so that the one or more transceivers 106 and 206 may receive user data, control information, or radio signals from one or more other devices. In addition, the one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

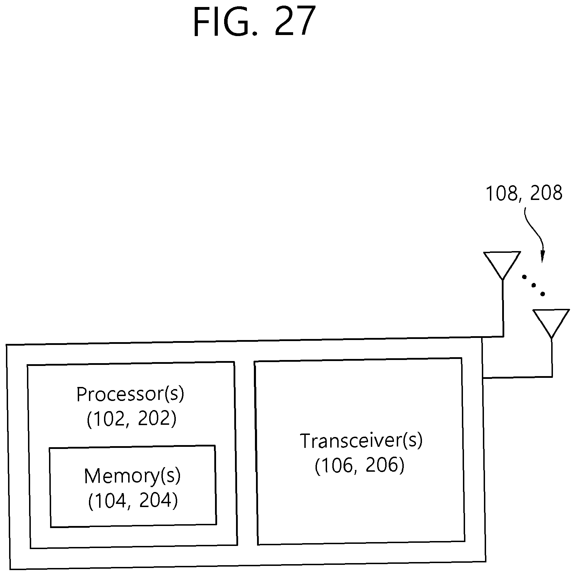

FIG. 27 illustrates another example of a wireless device.

Referring to FIG. 27, the wireless device may include at least one processor 102, 202, at least one memory 104, 204, at least one transceiver 106, 206, and one or more antennas 108, 208.

The difference between the example wireless device illustrated in FIG. 26 and the example wireless device illustrated in FIG. 27 is that in FIG. 26, the processor 102, 202 and memory 104, 204 are separate, while in the example of FIG. 27, the processor 102, 202 includes memory 104, 204. In other words, the processor and memory may form one chipset.

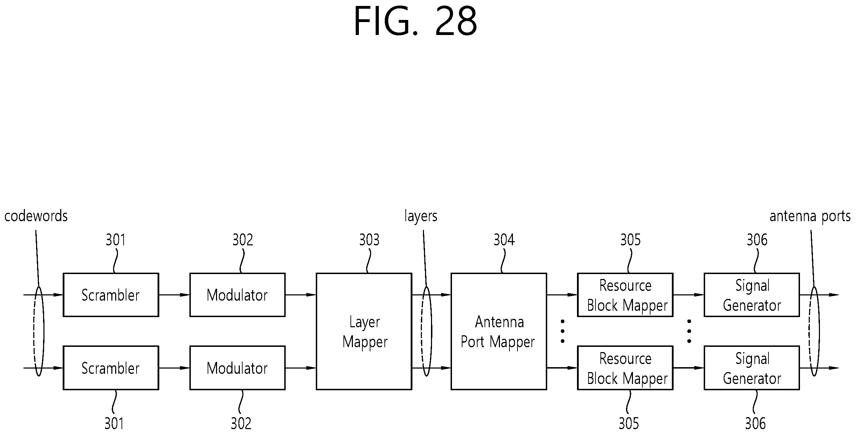

FIG. 28 shows an example of a structure of a signal processing module. Herein, signal processing may be performed in the processors 102 and 202 of FIG. 26.

Referring to FIG. 28, the transmitting device (e.g., a processor, the processor and a memory, or the processor and a transceiver) in a UE or BS may include a scrambler 301, a modulator 302, a layer mapper 303, an antenna port mapper 304, a resource block mapper 305, and a signal generator 306.

The transmitting device can transmit one or more codewords. Coded bits in each codeword are scrambled by the corresponding scrambler 301 and transmitted over a physical channel. A codeword may be referred to as a data string and may be equivalent to a transport block which is a data block provided by the MAC layer.

Scrambled bits are modulated into complex-valued modulation symbols by the corresponding modulator 302. The modulator 302 can modulate the scrambled bits according to a modulation scheme to arrange complex-valued modulation symbols representing positions on a signal constellation. The modulation scheme is not limited and m-PSK (m-Phase Shift Keying) or m-QAM (m-Quadrature Amplitude Modulation) may be used to modulate the coded data. The modulator may be referred to as a modulation mapper.

The complex-valued modulation symbols can be mapped to one or more transport layers by the layer mapper 303. Complex-valued modulation symbols on each layer can be mapped by the antenna port mapper 304 for transmission on an antenna port.

Each resource block mapper 305 can map complex-valued modulation symbols with respect to each antenna port to appropriate resource elements in a virtual resource block allocated for transmission. The resource block mapper can map the virtual resource block to a physical resource block according to an appropriate mapping scheme. The resource block mapper 305 can allocate complex-valued modulation symbols with respect to each antenna port to appropriate subcarriers and multiplex the complex-valued modulation symbols according to a user.

Signal generator 306 can modulate complex-valued modulation symbols with respect to each antenna port, that is, antenna-specific symbols, according to a specific modulation scheme, for example, OFDM (Orthogonal Frequency Division Multiplexing), to generate a complex-valued time domain OFDM symbol signal. The signal generator can perform IFFT (Inverse Fast Fourier Transform) on the antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator may include an IFFT module, a CP inserting unit, a digital-to-analog converter (DAC) and a frequency upconverter.

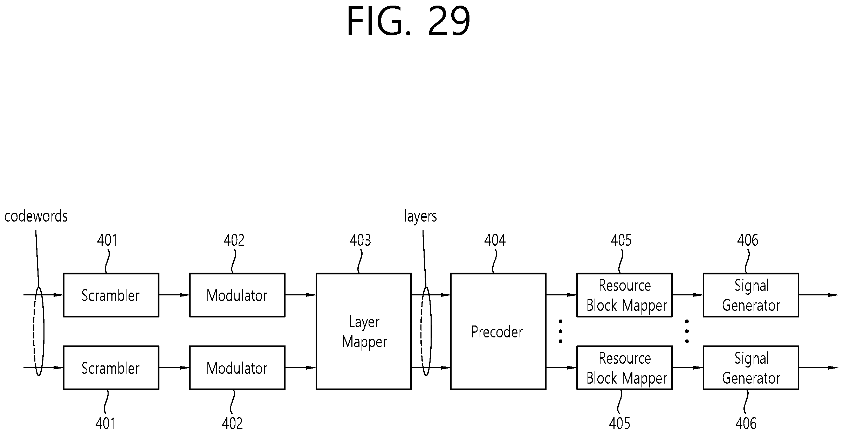

FIG. 29 shows another example of a structure of a signal processing module in a transmitting device. Herein, signal processing may be performed in a processor of a UE/BS, such as the processors 102 and 202 of FIG. 26.

Referring to FIG. 29, the transmitting device (e.g., a processor, the processor and a memory, or the processor and a transceiver) in the UE or the BS may include a scrambler 401, a modulator 402, a layer mapper 403, a precoder 404, a resource block mapper 405, and a signal generator 406.

The transmitting device can scramble coded bits in a codeword by the corresponding scrambler 401 and then transmit the scrambled coded bits through a physical channel.

Scrambled bits are modulated into complex-valued modulation symbols by the corresponding modulator 402. The modulator can modulate the scrambled bits according to a predetermined modulation scheme to arrange complex-valued modulation symbols representing positions on a signal constellation. The modulation scheme is not limited and pi/2-BPSK (pi/2-Binary Phase Shift Keying), m-PSK (m-Phase Shift Keying) or m-QAM (m-Quadrature Amplitude Modulation) may be used to modulate the coded data.

The complex-valued modulation symbols can be mapped to one or more transport layers by the layer mapper 403.

Complex-valued modulation symbols on each layer can be precoded by the precoder 404 for transmission on an antenna port. Here, the precoder may perform transform precoding on the complex-valued modulation symbols and then perform precoding. Alternatively, the precoder may perform precoding without performing transform precoding. The precoder 404 can process the complex-valued modulation symbols according to MIMO using multiple transmission antennas to output antenna-specific symbols and distribute the antenna-specific symbols to the corresponding resource block mapper 405. An output z of the precoder 404 can be obtained by multiplying an output y of the layer mapper 403 by an N x M precoding matrix W. Here, N is the number of antenna ports and M is the number of layers.

Each resource block mapper 405 maps complex-valued modulation symbols with respect to each antenna port to appropriate resource elements in a virtual resource block allocated for transmission.

The resource block mapper 405 can allocate complex-valued modulation symbols to appropriate subcarriers and multiplex the complex-valued modulation symbols according to a user.

Signal generator 406 can modulate complex-valued modulation symbols according to a specific modulation scheme, for example, OFDM, to generate a complex-valued time domain OFDM symbol signal. The signal generator 406 can perform IFFT (Inverse Fast Fourier Transform) on antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator 406 may include an IFFT module, a CP inserting unit, a digital-to-analog converter (DAC) and a frequency upconverter.

The signal processing procedure of the receiving device may be reverse to the signal processing procedure of the transmitting device. Specifically, the processor of the transmitting device decodes and demodulates RF signals received through antenna ports of the transceiver. The receiving device may include a plurality of reception antennas, and signals received through the reception antennas are restored to baseband signals, and then multiplexed and demodulated according to MIMO to be restored to a data string intended to be transmitted by the transmitting device. The receiving device may include a signal restoration unit that restores received signals to baseband signals, a multiplexer for combining and multiplexing received signals, and a channel demodulator for demodulating multiplexed signal strings into corresponding codewords. The signal restoration unit, the multiplexer and the channel demodulator may be configured as an integrated module or independent modules for executing functions thereof. More specifically, the signal restoration unit may include an analog-to-digital converter (ADC) for converting an analog signal into a digital signal, a CP removal unit that removes a CP from the digital signal, an FET module for applying FFT (fast Fourier transform) to the signal from which the CP has been removed to output frequency domain symbols, and a resource element demapper/equalizer for restoring the frequency domain symbols to antenna-specific symbols. The antenna-specific symbols are restored to transport layers by the multiplexer and the transport layers are restored by the channel demodulator to codewords intended to be transmitted by the transmitting device.

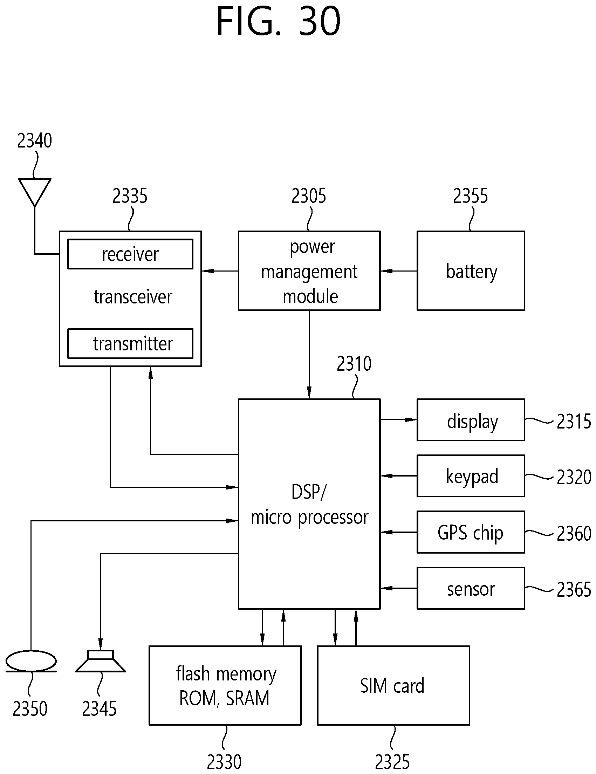

FIG. 30 illustrates an example of a wireless communication device according to an implementation example of the present disclosure.

Referring to FIG. 30, the wireless communication device, for example, a UE may include at least one of a processor 2310 such as a digital signal processor (DSP) or a microprocessor, a transceiver 2335, a power management module 2305, an antenna 2340, a battery 2355, a display 2315, a keypad 2320, a global positioning system (GPS) chip 2360, a sensor 2365, a memory 2330, a subscriber identification module (SIM) card 2325, a speaker 2345 and a microphone 2350. A plurality of antennas and a plurality of processors may be provided.

The processor 2310 can implement functions, procedures and methods described in the present description. The processor 2310 in FIG. 30 may be the processors 102 and 202 in FIG. 26.

The memory 2330 is connected to the processor 2310 and stores information related to operations of the processor. The memory may be located inside or outside the processor and connected to the processor through various techniques such as wired connection and wireless connection. The memory 2330 in FIG. 30 may be the memories 104 and 204 in FIG. 26.

A user can input various types of information such as telephone numbers using various techniques such as pressing buttons of the keypad 2320 or activating sound using the microphone 2350. The processor 2310 can receive and process user information and execute an appropriate function such as calling using an input telephone number. In some scenarios, data can be retrieved from the SIM card 2325 or the memory 2330 to execute appropriate functions. In some scenarios, the processor 2310 can display various types of information and data on the display 2315 for user convenience.

The transceiver 2335 is connected to the processor 2310 and transmit and/or receive RF signals. The processor can control the transceiver in order to start communication or to transmit RF signals including various types of information or data such as voice communication data. The transceiver includes a transmitter and a receiver for transmitting and receiving RF signals. The antenna 2340 can facilitate transmission and reception of RF signals. In some implementation examples, when the transceiver receives an RF signal, the transceiver can forward and convert the signal into a baseband frequency for processing performed by the processor. The signal can be processed through various techniques such as converting into audible or readable information to be output through the speaker 2345. The transceiver in FIG. 30 may be the transceivers 106 and 206 in FIG. 26.

Although not shown in FIG. 30, various components such as a camera and a universal serial bus (USB) port may be additionally included in the UE. For example, the camera may be connected to the processor 2310.

FIG. 30 is an example of implementation with respect to the UE and implementation examples of the present disclosure are not limited thereto. The UE need not essentially include all the components shown in FIG. 30. That is, some of the components, for example, the keypad 2320, the GPS chip 2360, the sensor 2365 and the SIM card 2325 may not be essential components. In this case, they may not be included in the UE.

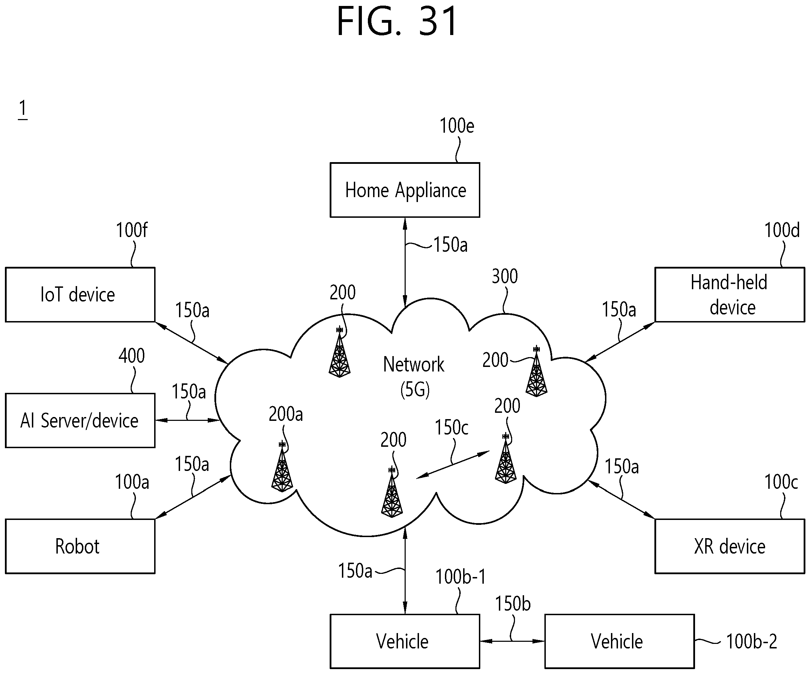

FIG. 31 illustrates a communication system 1 applied to the present specification.

Referring to FIG. 31, a communication system 1 applied to the present specification includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). In addition, the IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

Meanwhile, the NR supports multiple numerologies (or subcarrier spacing (SCS)) for supporting diverse 5G services. For example, if the SCS is 15kHz, a wide area of the conventional cellular bands may be supported. If the SCS is 30kHz/60kHz, a dense-urban, lower latency, and wider carrier bandwidth is supported. If the SCS is 60kHz or higher, a bandwidth greater than 24.25GHz is used in order to overcome phase noise.

An NR frequency band may be defined as a frequency range of two types (FR1, FR2). Values of the frequency range may be changed. For example, the frequency range of the two types (FR1, FR2) may be as shown below in Table 9. For convenience of explanation, among the frequency ranges that are used in an NR system, FR1 may mean a "sub 6GHz range", and FR2 may mean an "above 6GHz range" and may also be referred to as a millimeter wave (mmW).

[Table 9]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed. For example, as shown in Table 10 below, FR1 may include a band in the range of 410MHz to 7125MHz. That is, FR1 may include a frequency band of at least 6GHz (or 5850, 5900, 5925 MHz, and so on). For example, a frequency band of at least 6GHz (or 5850, 5900, 5925 MHz, and so on) included in FR1 may include an unlicensed band. The unlicensed band may be used for diverse purposes, e.g., the unlicensed band for vehicle-specific communication (e.g., automated driving).

[Table 10]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

Claims disclosed in the present specification can be combined in various ways. For example, technical features in method claims of the present specification can be combined to be implemented or performed in an apparatus, and technical features in apparatus claims of the present specification can be combined to be implemented or performed in a method. Further, technical features in method claims and apparatus claims of the present specification can be combined to be implemented or performed in an apparatus. Further, technical features in method claims and apparatus claims of the present specification can be combined to be implemented or performed in a method.

**Claims**

1. A method of operating an IAB node including a distributed unit (DU) and a mobile terminal (MT) in a wireless communication system, the method comprising:

   determining resource block groups (RBGs) for a first bandwidth part (BWP) of the MT,
   determining a resource block set which is a granularity for setting frequency domain attributes for a second BWP of the DU,
   wherein based on the first BWP being BWP i, a size of the BWP i being $N_{BWP,i}^{size}$ physical resource blocks (PRBs), a starting PRB of the BWP i being $N_{BWP,i}^{start}$, and a size of a RBG for the BWP i being P, total number of RBGs for the first BWP ($N_{RBG}$) is given by

$$N_{RBG} = \left\lceil \left( N_{BWP,i}^{size} + \left( N_{BWP,i}^{start} \bmod P \right) \right) / P \right\rceil,$$

   wherein, among the $N_{RBG}$ RBGs, a size of a first RBG ($RBG_0^{size}$) is given by $RBG_0^{size} = P - N_{BWP,i}^{start} \bmod P$,

   a size of a last RBG ($RBG_{last}^{size}$) is given by a following equation,

$$RBG_{last}^{size} = \left( N_{BWP,i}^{start} + N_{BWP,i}^{size} \right) \bmod P \ \text{ if } \left( N_{BWP,i}^{start} + N_{BWP,i}^{size} \right) \bmod P > 0 \ \text{ and } P$$

   otherwise,
   a size of all other RBGs is P, and
   wherein the resource block set is determined based on a common resource block (CRB)#0 of the MT.

2. The method of claim 1, wherein the resource block set comprises N (wherein N is a natural number) physical resource blocks (PRBs).

3. The method of claim 1, wherein setting the frequency domain attributes for the second BWP indicates whether a specific frequency resource is configured to be hard, soft, or not-available for the DU.

4. The method of claim 1, wherein when a plurality of serving cells are configured for the MT, a position of the CRB#0 is determined based on a primary cell among the plurality of serving cells.

5. The method of claim 1, wherein, when a plurality of serving cells are configured for the MT, a position of the CRB#0 is determined based on a serving cell with a lowest index among the plurality of serving cells.

6. The method of claim 1, wherein, when a plurality of serving cells are configured for the MT, a position of the CRB#0 is determined based on a serving cell with a highest index among the plurality of serving cells.

7. The method of claim 1, wherein, when a plurality of serving cells are configured for the MT, a position of the CRB#0 is determined based on a serving cell indicated by a network among the plurality of serving cells.

8. The method of claim 1, wherein a position of CRB#0 of the DU and a position of CRB#0 of the MT are independent of each other.

9. The method of claim 1, wherein the MT and the DU perform a frequency division multiplexing (FDM) operation on specific resources.

10. An integrated access and backhaul (IAB) node including a distributed unit (DU) and a mobile terminal (MT), the IAB node comprising:

   a transceiver;
   at least one memory; and
   at least one processor operatively coupled with the at least one memory and the transceiver, wherein the processor is adapted to:

   determine resource block groups (RBGs) for a first bandwidth part (BWP) of the MT,
   determine a resource block set which is a granularity for setting frequency domain attributes for a second BWP of the DU,
   wherein based on the first BWP being BWP i, a size of the BWP i being $N_{BWP,i}^{size}$ physical resource blocks (PRBs), a starting PRB of the BWP i being $N_{BWP,i}^{start}$, and a size of a RBG for the BWP i being P, total number of RBGs for the first BWP ($N_{RBG}$) is given by

$$N_{RBG} = \left\lceil \left( N_{BWP,i}^{size} + \left( N_{BWP,i}^{start} \, mod \, P \right) \right) / P \right\rceil,$$

   wherein, among the $N_{RBG}$ RBGs, a size of a first RBG ($RBG_0^{size}$) is given by $RBG_0^{size} = P - N_{BWP,i}^{start} \, mod \, P$,

   a size of a last RBG ($RBG_{last}^{size}$) is given by a following equation,

$$RBG_{last}^{size} = \left( N_{BWP,i}^{start} + N_{BWP,i}^{size} \right) mod \, P \ \ if \ \left( N_{BWP,i}^{start} + N_{BWP,i}^{size} \right) mod \, P > 0 \ \ and \ P$$

   otherwise,
   a size of all other RBGs is P, and
   wherein the resource block set is determined based on a common resource block (CRB)#0 of the MT.

11. The IAB node of claim 10, wherein the resource block set comprises N (wherein N is a natural number) physical resource blocks (PRBs).

12. The IAB node of claim 10, wherein setting the frequency domain attributes for the second BWP indicates whether a specific frequency resource is configured to be hard, soft, or not-available for the DU.

13. The IAB node of claim 10, wherein when a plurality of serving cells are configured for the MT, a position of the CRB#0 is determined based on a primary cell among the plurality of serving cells.

14. The IAB node of claim 10, wherein, when a plurality of serving cells are configured for the MT, a position of the CRB#0 is determined based on a serving cell with a lowest index among the plurality of serving cells.

15. The IAB node of claim 10, wherein, when a plurality of serving cells are configured for the MT, a position of the CRB#0 is determined based on a serving cell with a highest index among the plurality of serving cells.

16. The IAB node of claim 10, wherein, when a plurality of serving cells are configured for the MT, a position of the CRB#0 is determined based on a serving cell indicated by a network among the plurality of serving cells.

17. The IAB node of claim 10, wherein a position of CRB#0 of the DU and a position of CRB#0 of the MT are independent of each other.

18. The IAB node of claim 10, wherein the MT and the DU perform a frequency division multiplexing (FDM) operation on specific resources.

19. An apparatus of an integrated access and backhaul (IAB) node including a distributed unit (DU) and a mobile terminal (MT), the apparatus comprising:

at least one memory; and
at least one processor operatively coupled with the at least one memory,
wherein the processor is adapted to:

determine resource block groups (RBGs) for a first bandwidth part (BWP) of the MT,
determine a resource block set which is a granularity for setting frequency domain attributes for a second BWP of the DU,
wherein based on the first BWP being BWP i, a size of the BWP i being $N_{BWP,i}^{size}$ physical resource blocks (PRBs), a starting PRB of the BWP i being $N_{BWP,i}^{start}$, and a size of a RBG for the BWP i being P, total number of RBGs for the first BWP ($N_{RBG}$) is given by

$$N_{RBG} = \left\lceil \left( N_{BWP,i}^{size} + \left( N_{BWP,i}^{start} \bmod P \right) \right) / P \right\rceil,$$

wherein, among the $N_{RBG}$ RBGs, a size of a first RBG ($RBG_0^{size}$) is given by $RBG_0^{size} = P - N_{BWP,i}^{start} \bmod P$,

a size of a last RBG ($RBG_{last}^{size}$) is given by a following equation,

$$RBG_{last}^{size} = \left( N_{BWP,i}^{start} + N_{BWP,i}^{size} \right) \bmod P \ \text{if} \ \left( N_{BWP,i}^{start} + N_{BWP,i}^{size} \right) \bmod P > 0 \ \text{and} \ P$$

otherwise,
a size of all other RBGs is P, and
wherein the resource block set is determined based on a common resource block (CRB)#0 of the MT.

20. At least one computer readable medium (CRM) having instructions to be executed by at least one processor to perform operations includes:

determining resource block groups (RBGs) for a first bandwidth part (BWP) of the MT,
determining a resource block set which is a granularity for setting frequency domain attributes for a second BWP of the DU,
wherein based on the first BWP being BWP i, a size of the BWP i being $N_{BWP,i}^{size}$ physical resource blocks (PRBs), a starting PRB of the BWP i being $N_{BWP,i}^{start}$, and a size of a RBG for the BWP i being P, total number of RBGs for the first BWP ($N_{RBG}$) is given by

$$N_{RBG} = \left\lceil \left( N_{BWP,i}^{size} + \left( N_{BWP,i}^{start} \bmod P \right) \right) / P \right\rceil,$$

wherein, among the $N_{RBG}$ RBGs, a size of a first RBG ($RBG_0^{size}$) is given by $RBG_0^{size} = P - N_{BWP,i}^{start} \bmod P$,

a size of a last RBG ($RBG_{last}^{size}$) is given by a following equation,

$$RBG_{last}^{size} = \left(N_{BWP,i}^{start} + N_{BWP,i}^{size}\right) mod\ P\ \ \text{if}\ \left(N_{BWP,i}^{start} + N_{BWP,i}^{size}\right) mod\ P > 0\ \ \text{and}\ P$$

otherwise,
a size of all other RBGs is P, and
wherein the resource block set is determined based on a common resource block (CRB)#0 of the MT.

# FIG. 1

# FIG. 2

| UE | BS |
|---|---|
| PDCP ←→ | PDCP |
| RLC ←→ | RLC |
| MAC ←→ | MAC |
| PHY ←→ | PHY |

# FIG. 3

| UE | BS | MME |
|---|---|---|
| NAS ←――――――――――→ | | NAS |
| RRC ←→ | RRC | |
| PDCP ←→ | PDCP | |
| RLC ←→ | RLC | |
| MAC ←→ | MAC | |
| PHY ←→ | PHY | |

# FIG. 4

# FIG. 5

**gNB**
- RRM between cells
- RB control
- Connection mobility control
- Wireless access control
- Measurement setting and provision
- Dynamic resource allocation (scheduler)

NG-RAN

**AMF**
- NAS security
- Idle state mobility processing

**UPF**
- Mobility anchoring
- PDU processing

5GC

**SMF**
- UE IP address allocation
- PDU session control

Internet

EP 4 383 895 A1

# FIG. 6

· · · | One Frame (10ms) | · · ·

· · · | Half-Frame (5ms) | Half-Frame (5ms) | · · ·

· · · | Subframe 0 (1ms) | · · · | Subframe 4 (1ms) | Subframe 5 (1ms) | · · · | Subframe 9 (1ms) | · · ·

Subframe (1ms)

15KHz | Slot 0 (14symbols) |

1ms

30KHz | Slot 0 (14symbols) | Slot 1 |

500us

60KHz | Slot 0 (14symbols) | Slot 1 | Slot 2 | Slot 3 |

250us

120KHz | Slot 0 (14symbols) | Slot 1 | Slot 2 | Slot 3 | Slot 4 | Slot 5 | Slot 6 | Slot 7 |

125us

# FIG. 7

Resource grid

A carrier
(up to 3300 subcarriers,
i.e., 275 RBs)

A BWP

1RB=12 subcarriers

1 RE

1subcarrier

1 symbol

1=0 • • •

k=0

EP 4 383 895 A1

# FIG. 8

CCE #2    CCE #n

$N^{CORESET}_{RB}$ resource blocks

CCE #1

1, 2 or 3 OFDM symbols

# FIG. 9

LTE/LTE-A

NR

# FIG. 10

EP 4 383 895 A1

Downlink only, or Uplink only

Frequency

RB index — Symbol index (0 1 2 3 4 5 6 7 8 9 10 11 12 13), RB index (0 1 2 3 4 5)

One TTI

▨ : DL Control channel     ▦ : UL Control channel

# FIG. 11

# FIG. 12

EP 4 383 895 A1

Initial cell search      system information reception      random access procedure      general DL/UL Tx/Rx

| P/S-SCH & [DLRS] & PBCH | PDCCH/ PDSCH (BCCH) | PRACH | PDCCH/ PDSCH | PUSCH | PDCCH/ PDSCH | PDCCH/ PDSCH | PUSCH/ PUCCH |

S11      S12      S13      S14      S15      S16      S17      S18

• DL/UL ACK/NACK

• UE CQI/PMI/Rank report using PUSCH and/or PUCCH

# FIG. 13

Fiber transport

→ Backhaul link

- - → Access link

# FIG. 14

Relay
Node2

Relay
Node1

DgNB

UE3

UE1

UE2

→ Backhaul link

⇢ Access link

# FIG. 15

**(a)**

NGC — NG — IAB-donor gNB — NR Uu — IAB-node — NR Uu — UE

UE: SA with NGC
IAB-node: SA with NGC

**(b)**

EPC — S1 — eNB — X2 — IAB-donor gNB — NG — NGC

eNB — LTE Uu — UE

IAB-donor gNB — NR Uu — IAB-node — NR Uu — UE

UE: NAS with EPC
IAB-node: SA with NGC

**(c)**

EPC — S1 — eNB — X2 — IAB-donor gNB

EPC — S1-U — IAB-donor gNB

eNB — LTE Uu — IAB-node

IAB-donor gNB — NR Uu — IAB-node — NR Uu — UE

UE: NAS with EPC
IAB-node: NAS with EPC

# FIG. 16

# FIG. 17

Parent node | DU

Parent link

IAB node | MT / DU

Child link

Child node | MT / DU

FIG. 18

# FIG. 19

# FIG. 20

Timing Case #7

EP 4 383 895 A1

# FIG. 21

IAB node

MT
DU

MT Tx

MT
DU

MT Rx

MT
DU

DU Tx

MT
DU

DU Rx

(a)

IAB node

MT
DU

MT Tx/DU Tx

MT
DU

MT Rx/DU Rx

MT
DU

MT Tx/DU Rx

MT
DU

MT Rx/DU Tx

(b)

# FIG. 22

Carrier bandwidth part 2
$N_{BWP, 2}^{size}$

Carrier bandwidth part 1
$N_{BWP, 1}^{size}$

Carrier bandwidth part 0
$N_{BWP, 0}^{size}$

PRB 0 on carrier bandwidth 0

Resource block as a reference

Carrier Bandwidth

$N_{BWP, 2}^{start}$

$N_{BWP, 1}^{start}$

$N_{BWP, 0}^{start}$

PRB N3

PRB1

PRB0

PRB N2

PRB1

PRB0

PRB N1

PRB1

PRB0

CRB0

EP 4 383 895 A1

# FIG. 23

$N_{BWP, i}^{size} = 36$
$N_{BWP, i}^{start} = 30$

# FIG. 24

(a)

(b)

☐ : RBG grid of the MT

⌐ ⌐ : RB set grid of the DU

# FIG. 25

| Determining resource block groups (RBGs) for the first bandwidth part (BWP) of the MT | ～S251 |

↓

| Determining a resource block set, which is the granularity for setting frequency domain attributes for the second bandwidth part of the DU, wherein the resource block set is determined based on the common resource block (CRB) #0 of the MT | ～S252 |

# FIG. 26

EP 4 383 895 A1

# FIG. 27

108, 208

Processor(s)
(102, 202)

Memory(s)
(104, 204)

Transceiver(s)
(106, 206)

# FIG. 28

# FIG. 29

codewords

401 → Scrambler → 402 → Modulator → 403 Layer Mapper → layers → 404 Precoder → 405 Resource Block Mapper → 406 Signal Generator →

401 → Scrambler → 402 → Modulator → 403 Layer Mapper → 404 Precoder → 405 Resource Block Mapper → 406 Signal Generator →

# FIG. 30

# FIG. 31

<div align="center">**INTERNATIONAL SEARCH REPORT**</div>

| International application No. |
|---|
| **PCT/KR2022/011600** |

**A. CLASSIFICATION OF SUBJECT MATTER**

**H04W 72/04**(2009.01)i; **H04L 5/00**(2006.01)i; **H04W 84/04**(2009.01)i; **H04W 92/20**(2009.01)i

According to International Patent Classification (IPC) or to both national classification and IPC

**B. FIELDS SEARCHED**

Minimum documentation searched (classification system followed by classification symbols)

H04W 72/04(2009.01); H04L 5/00(2006.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: IAB(integrated access and backhaul), DU(distributed unit), MT(mobile terminal), 대역 부분(bandwidth part), RBG(resource block group), 입도(granularity), 자원블록 집합(resource block set), 사이즈(size), 공통 자원블록(common resource block: CRB)

**C. DOCUMENTS CONSIDERED TO BE RELEVANT**

| Category* | Citation of document, with indication, where appropriate, of the relevant passages | Relevant to claim No. |
|---|---|---|
| Y | NOKIA et al. Alignment of RRC parameter names for 38.214. R1-2009778, 3GPP TSG RAN WG1 Meeting #103-e. 14 November 2020. See section 6.1.2.2.1. | 1-20 |
| Y | KR 10-2020-0016817 A (LG ELECTRONICS INC.) 17 February 2020 (2020-02-17) See paragraphs [0073], [0093]-[0094], [0230], [0307], [0322] and [0435]. | 1-20 |
| A | ZTE et al. Enhancements to the IAB resource multiplexing. R1-2104877, 3GPP TSG RAN WG1 Meeting #105-e. 12 May 2021. See sections 1-2.3. | 1-20 |
| A | NOKIA et al. On NR IAB-node DL demodulation requirements. R4-2011328, 3GPP TSG RAN WG4 Meeting #96-e. 07 August 2020. See sections 1-4. | 1-20 |
| A | US 2021-0119745 A1 (HUAWEI TECHNOLOGIES CO., LTD.) 22 April 2021 (2021-04-22) See paragraphs [0150]-[0295]; and figures 1-14. | 1-20 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **31 October 2022** | **01 November 2022** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

<table>
<tr><td colspan="2" align="center"><strong>INTERNATIONAL SEARCH REPORT</strong><br><strong>Information on patent family members</strong></td><td colspan="2">International application No.<br><strong>PCT/KR2022/011600</strong></td></tr>
</table>

| Patent document cited in search report | Publication date (day/month/year) | Patent family member(s) | | Publication date (day/month/year) |
|---|---|---|---|---|
| KR 10-2020-0016817 A | 17 February 2020 | CN 111096027 | A | 01 May 2020 |
| | | EP 3651526 | A1 | 13 May 2020 |
| | | EP 3651526 | B1 | 30 March 2022 |
| | | US 11412482 | B2 | 09 August 2022 |
| | | US 2021-0368481 | A1 | 25 November 2021 |
| | | WO 2020-032594 | A1 | 13 February 2020 |
| US 2021-0119745 A1 | 22 April 2021 | CN 110611957 | A | 24 December 2019 |
| | | CN 110611957 | B | 07 September 2021 |
| | | EP 3817480 | A1 | 05 May 2021 |
| | | US 11398885 | B2 | 26 July 2022 |
| | | WO 2019-237979 | A1 | 19 December 2019 |

Form PCT/ISA/210 (patent family annex) (July 2022)